# EUROPEAN PATENT APPLICATION

(11) **EP 4 799 759 A1**
(43) Date of publication of application: **02.09.2026**
(21) Application number: 24890697.6
(22) Date of filing: 13.11.2024
(51) Int. Cl.: B24C 1/04, B24C 3/00, B24C 9/00, B09B 3/00, B09B 3/35, B09B 3/40

(54) **BLADE CUTTING APPARATUS, BLADE CUTTING METHOD, AND TREATMENT DEVICE FOR WASTE FAN BLADE**

(30) Priority: 15.11.2023 CN 202323088875 U; 02.09.2024 CN 202422144854 U; 02.09.2024 CN 202411223081; 02.09.2024 CN 202411223073; 02.09.2024 CN 202422144942 U
(71) Applicant: Jereh New Energy Regeneration and Recycling Technology Co., Ltd., Yantai, Shandong 264003 (CN)
(72) Inventor: LI, Enjie, Yantai, Shandong 264003 (CN); YU, Qun, Yantai, Shandong 264003 (CN); SUN, Lin, Yantai, Shandong 264003 (CN); JIANG, Xiwei, Yantai, Shandong 264003 (CN); WANG, Zhixue, Yantai, Shandong 264003 (CN); JIA, Yushang, Yantai, Shandong 264003 (CN); MAO, Chuantao, Yantai, Shandong 264003 (CN)
(74) Representative: Ziebig Hengelhaupt Intellectual Property Attorneys Patentanwaltskanzlei PartGmbB
(86) International application number: PCT/CN2024/131700
(87) International publication number: WO 2025/103342

(57) **Abstract**

This application discloses a blade cutting device, a blade cutting method, and an apparatus for processing waste wind turbine blades. The disclosed blade cutting device includes a device frame, a conveying apparatus, and a cutting apparatus. The device frame includes a first frame body and a second frame body, the first frame body and the second frame body are movably connected to enable the device frame to switch between an expanded state and a collapsed state, the conveying apparatus is disposed on the first frame body, and the cutting apparatus is disposed on the second frame body. When the device frame is in the expanded state, the conveying apparatus and the cutting apparatus are spaced apart in an expansion plane of the device frame, the conveying apparatus is configured to convey a blade to be cut, and the cutting apparatus is configured to cut the blade to be cut. When the device frame is in the collapsed state, the conveying apparatus moves with the first frame body to a position above the second frame body.

## Description

### CROSS-REFERENCE TO RELATED APPLICATIONS

This application claims priority to Chinese Patent Applications No. 202422144854.9, filed with the China National Intellectual Property Administration on September 2, 2024 and entitled "BLADE CUTTING DEVICE", No. 202411223081.1, filed with the China National Intellectual Property Administration on September 2, 2024 and entitled "BLADE CUTTING DEVICE", No. 202411223073.7, filed with the China National Intellectual Property Administration on September 2, 2024 and entitled "BLADE CUTTING METHOD", No. 202422144942.9, filed with the China National Intellectual Property Administration on September 2, 2024 and entitled "BLADE CUTTING DEVICE", No. 202323088875.5, filed with the China National Intellectual Property Administration on November 15, 2023 and entitled "APPARATUS FOR PROCESSING WASTE WIND TURBINE BLADES", which are incorporated herein by reference in their entireties.

### TECHNICAL FIELD

This application relates to the field of cutting devices, and in particular, to a blade cutting device, a blade cutting method, and an apparatus for processing waste wind turbine blades.

### BACKGROUND

Wind power technology, due to its clean and renewable form of energy, has seen continuous growth in its application scale. When wind turbines reach their design life, or as technological iteration accelerates and energy efficiency requirements increase, some wind turbines need to be decommissioned and recycled before the design life expires.

Wind turbine blades usually need to be cut and dismantled during recycling. In related undisclosed technologies, a blade cutting device is used to cut and dismantle the blades. Although the size of the blade cutting device in the related undisclosed technologies has been significantly reduced, transporting the blade cutting device still poses challenges due to its large size.

### SUMMARY

This application discloses a blade cutting device, a blade cutting method, and an apparatus for processing waste wind turbine blades, to resolve a problem that transporting blade cutting devices in related undisclosed technologies poses challenges.

To resolve the foregoing technical problem, this application is implemented as follows:
An embodiment of this application discloses a blade cutting device. The disclosed blade cutting device includes a device frame, a conveying apparatus, and a cutting apparatus. The device frame includes a first frame body and a second frame body, the first frame body and the second frame body are movably connected to enable the device frame to switch between an expanded state and a collapsed state, the conveying apparatus is disposed on the first frame body, and the cutting apparatus is disposed on the second frame body. When the device frame is in the expanded state, the conveying apparatus and the cutting apparatus are spaced apart in an expansion plane of the device frame, the conveying apparatus is configured to convey a blade to be cut, and the cutting apparatus is configured to cut the blade to be cut. When the device frame is in the collapsed state, the conveying apparatus moves with the first frame body to a position above the second frame body.

Another embodiment of this application discloses a blade cutting device. The disclosed blade cutting device includes a device frame, a wastewater collection module, and a waterjet cutting apparatus.

The wastewater collection module includes a water receiving tray and a wastewater tank, the waterjet cutting apparatus includes a cutting head drive module and a waterjet cutting head, the cutting head drive module is disposed on the device frame, the cutting head drive module is connected to the waterjet cutting head and configured to drive the waterjet cutting head to move to cut the blade, the water receiving tray is disposed on the device frame and located below the waterjet cutting head, and the wastewater tank is disposed on the device frame and connected to the water receiving tray.

Optionally, the wastewater collection module further includes a settling tank and a water pump, the settling tank is disposed on the device frame, and the water receiving tray, the settling tank, the water pump, and the wastewater tank are sequentially connected.

Optionally, the wastewater collection module further includes a first filtering apparatus, and the first filtering apparatus is disposed between the settling tank and the water pump.

Optionally, an avoidance hole is opened in the water receiving tray, the cutting head drive module passes through the avoidance hole and is disposed on the device frame, and a projection area of the water receiving tray in a vertical direction is greater than or equal to a projection area of a motion range of the waterjet cutting head in the vertical direction.

Another embodiment of this application discloses a blade cutting device, including a device frame, a conveying apparatus, and a cutting apparatus, the conveying apparatus includes a first drive mechanism, a second drive mechanism, and at least two rotating assemblies, each of the rotating assemblies includes a mounting bracket and a rotating body, the mounting bracket is disposed on the device frame, the rotating body is rotatably disposed on the mounting bracket, a conveying space is formed between the rotating bodies of the at least two rotating assemblies, and the cutting apparatus is disposed on the device frame.

The first drive mechanism is connected to the mounting brackets and configured to drive the mounting brackets to move along the device frame, to drive the rotating bodies of the at least two rotating assemblies to clamp the blade; and the second drive mechanism is connected to the rotating bodies and configured to drive the rotating bodies to rotate, to drive the blade to extend by a preset length along the conveying space, and the cutting apparatus is configured to cut a portion of the blade that extends out of the conveying space.

Optionally, the conveying apparatus further includes an auxiliary conveying assembly, the auxiliary conveying assembly includes an auxiliary base and an auxiliary roller, the auxiliary base is disposed on the device frame, the auxiliary roller is rotatably disposed on the auxiliary base about a first axis, an extension direction of the first axis is perpendicular to a conveying direction of the blade in the conveying space, and the auxiliary roller is configured to be in rolling engagement with the blade in the conveying direction.

Optionally, the conveying apparatus includes a first auxiliary conveying assembly and a second auxiliary conveying assembly, and the first auxiliary conveying assembly and the second auxiliary conveying assembly are respectively disposed on two sides of the conveying space in the conveying direction.

Optionally, the blade cutting device further includes a detection apparatus and a first control apparatus, the detection apparatus is disposed on the device frame, the detection apparatus is configured to detect whether the blade extends by the preset length along the conveying space, and the detection apparatus and the second drive mechanism are both connected to the first control apparatus.

When the detection apparatus detects that the blade extends by the preset length along the conveying space, the first control apparatus controls the second drive mechanism to stop driving the rotating bodies.

Optionally, the blade cutting device further includes the first control apparatus, the first drive mechanism, the second drive mechanism, and the cutting apparatus are all connected to the first control apparatus, the first control apparatus is configured to control the first drive mechanism to drive the mounting brackets to move along the device frame, to drive the rotating bodies of the at least two rotating assemblies to clamp the blade; when the rotating bodies of the at least two rotating assemblies clamp the blade, the first control apparatus is configured to control the second drive mechanism to drive the rotating bodies to rotate, to drive the blade to extend by the preset length along the conveying space; and when the blade extends out of the conveying space by the preset length, the first control apparatus is configured to control the cutting apparatus to cut the portion of the blade that extends out of the conveying space. Another embodiment of this application discloses a blade cutting method, performed based on a blade cutting device provided with a conveying space, and the disclosed blade cutting device including the method including: conveying a blade, to enable the blade to extend out of the conveying space by a preset length; and scanning an output portion of the blade that extends out of the conveying space, and obtaining scanning information; determining a cutting path for the output portion based on the scanning information; and cutting the output portion along the cutting path.

Another embodiment of this application discloses an apparatus for processing waste wind turbine blades, the apparatus including: the blade cutting device according to the foregoing embodiment; a crushing mechanism, configured to crush a waste wind turbine blade; a pyrolysis rotary kiln, connected to the crushing mechanism, and performing pyrolysis on the crushed waste wind turbine blade; a smoldering system and an oil recovery system, respectively connected to the pyrolysis rotary kiln; and a waste gas processing system, connected to any one of the smoldering system, the oil recovery system, and the pyrolysis rotary kiln.

The technical solutions adopted in this application can achieve the following technical effects:
In the blade cutting device disclosed in this embodiment of this application, the device frame is disposed as a structure including the first frame body and the second frame body, and the first frame body and the second frame body are movably connected to enable the device frame to switch between the expanded state and the collapsed state. The conveying apparatus is disposed on the first frame body, and the cutting apparatus is disposed on the second frame body, so that when the device frame is in the expanded state, the conveying apparatus and the cutting apparatus are spaced apart in the expansion plane of the device frame, so that the conveying apparatus may convey the blade to be cut, and the cutting apparatus may cut the blade to be cut. When the device frame is in the collapsed state, the conveying apparatus may rotate with the first frame body to the position above the second frame body, to avoid a large space occupied due to the expansion of the first frame body and the second frame body, thereby facilitating transport of the blade cutting device.

### BRIEF DESCRIPTION OF THE DRAWINGS

FIG. 1 is a schematic diagram of a device frame in a collapsed state according to an embodiment of this application;
FIG. 2 is a schematic diagram of a device frame in an expanded state according to an embodiment of this application;
FIG. 3 is an overall schematic diagram of a blade cutting device conveying and cutting a blade to be cut according to an embodiment of this application;
FIG. 4 is a schematic structural diagram of a conveying apparatus from a first perspective according to an embodiment of this application;
FIG. 5 is a schematic structural diagram of a conveying apparatus from a second perspective according to an embodiment of this application;
FIG. 6 is a partial schematic enlarged view of a conveying apparatus according to an embodiment of this application;
FIG. 7 is a partial schematic diagram of a cutting apparatus according to an embodiment of this application;
FIG. 8 is a schematic structural diagram of another blade cutting device according to an embodiment of this application;
FIG. 9 is a partial schematic enlarged view of FIG. 8;
FIG. 10 is a partial schematic enlarged view of FIG. 8;
FIG. 11 is a schematic structural diagram of another blade cutting device according to an embodiment of this application;
FIG. 12 is a partial schematic enlarged view of FIG. 11;
FIG. 13 is a schematic structural diagram of a second filtering apparatus;
FIG. 14 is a schematic structural diagram of another blade cutting device according to an embodiment of this application;
FIG. 15 is a schematic diagram of a blade cutting device conveying and cutting a blade according to an embodiment of the present invention;
FIG. 16 is a schematic diagram of an internal structure of a blade according to an embodiment of this application, where dashed-line arrows indicate a cutting path, and numbers ①, ②, ③, and ④ respectively represent a first cutting route, a second cutting route, a third cutting route, and a fourth cutting route;
FIG. 17 is a schematic structural diagram of a blade according to an embodiment of this application, where a dashed line and a number ⑤ represents a fifth cutting route, a solid-line arrow ⑥ represents a first direction, and a solid-line arrow ⑦ represents a second direction;
FIG. 18 is a block diagram of an apparatus for processing waste wind turbine blades according to an embodiment of this application; and
FIG. 19 is a block diagram of a smoldering system according to an embodiment of this application.

Description of reference numerals:
A-blade to be cut, A1-arc-shaped side plate, A2-first inner plate, A3-second inner plate,
100-device frame, 110-first frame body, 120-second frame body, 130-leg, 140-column, 150-locking mechanism, 150-guide rail, 200-conveying apparatus, 210-first drive mechanism, 220-second drive mechanism, 230-rotating assembly, 231-mounting bracket, 232-rotating body, 231a-guide rail engaging portion, 232-rotating body, 240-auxiliary conveying assembly, 241-auxiliary base, 242-auxiliary roller, 240a-first auxiliary conveying assembly, 240b-second auxiliary conveying assembly,
300-cutting apparatus, 310-omnidirectional mobile robotic arm, 320-lifting mechanism, 330-cutting body, 340-scanning apparatus, 311-drive module, 360-distance measuring module, 350-pressure detection module,
400-frame drive mechanism,
500-weather instrument,
600-housing, 610-top plate, 620-side plate, 630-end plate,
700-lifting drive member, 800-control box,
900-wastewater collection module, 910-water receiving tray, 920-wastewater tank, 930-settling tank, 940-water pump, 950-first filtering apparatus, 970-second filtering apparatus, 971-filter support, 972-conveying roller drive member, and 973-conveying roller;
1. crushing mechanism; 2. pyrolysis rotary kiln; 3. smoldering system; 31. smoldering decarbonization furnace; 32. gas delivery unit; 32. gas delivery unit; 321. gas distributor; 322. mass flow meter; 323. air supply portion; 33. conveying portion; 34. temperature sensor; 4. oil recovery system; 41. dust collector; 42. condensing device; 5. waste gas processing system; 51. alkali scrubbing apparatus; 52. demisting apparatus; 53. adsorption unit; 6. feeding apparatus; 7. cooling device.

### DETAILED DESCRIPTION

To clearly states the objectives, technical solutions, and advantages of this application, the technical solutions of this application will be clearly and completely described below with reference to specific embodiments of this application and the accompanying drawings. Apparently, the described embodiments are merely some rather than all of the embodiments of this application. All other embodiments obtained by persons of ordinary skill in the art based on embodiments of this application without creative efforts shall fall within the scope of protection of this application.

The technical solutions disclosed in the embodiments of this application are described below in detail with reference to the accompanying drawings.

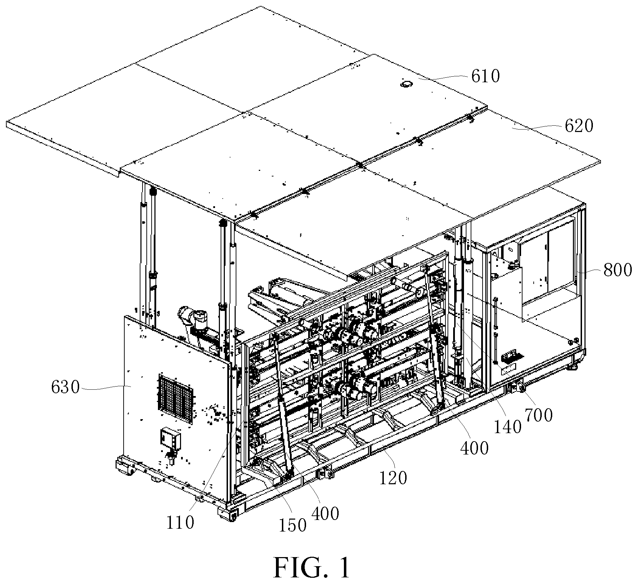

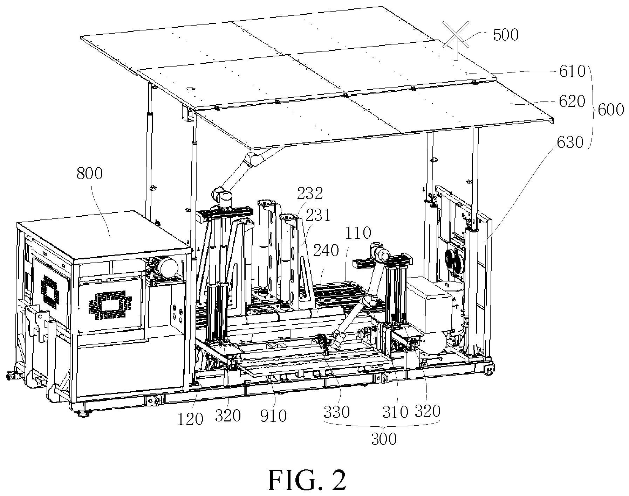

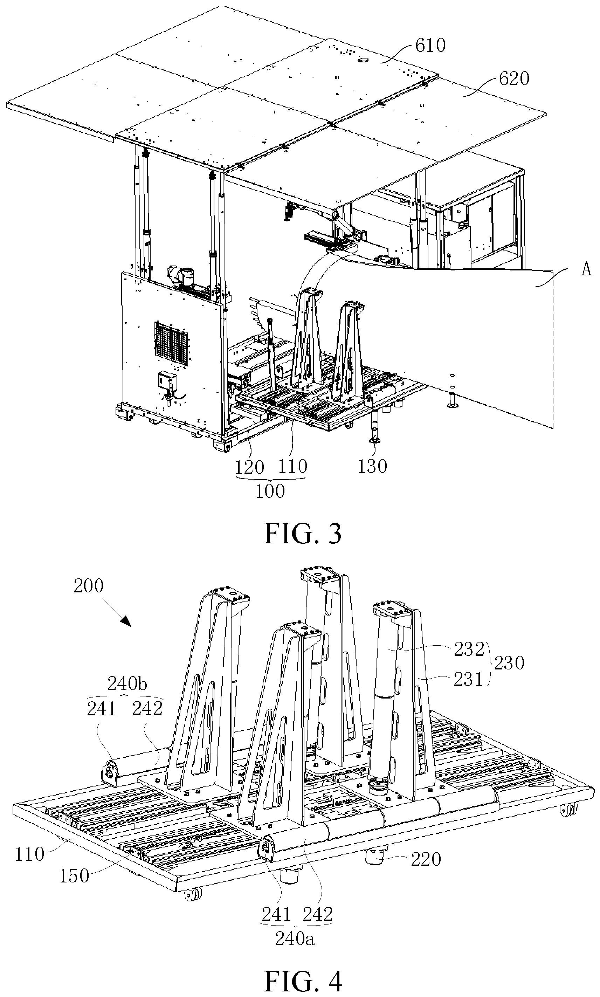

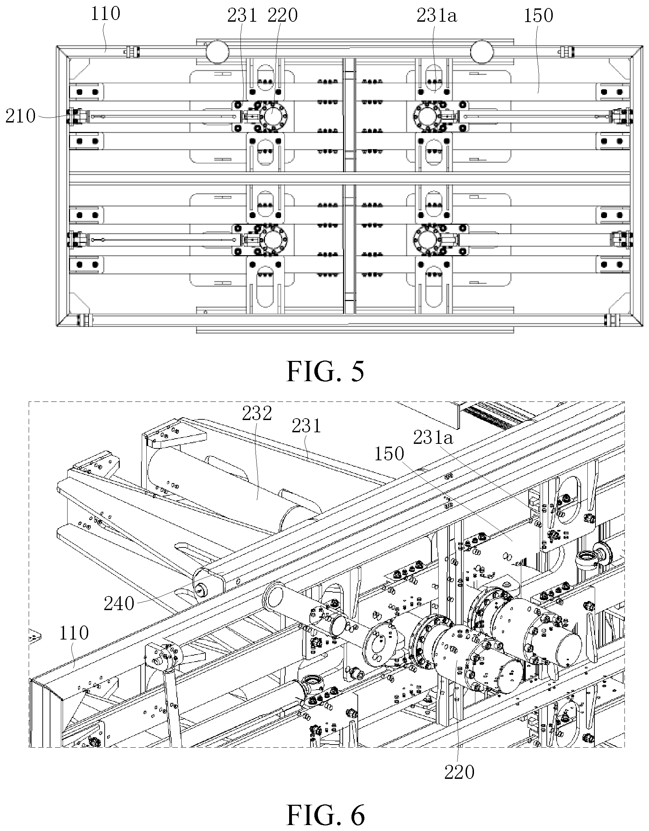

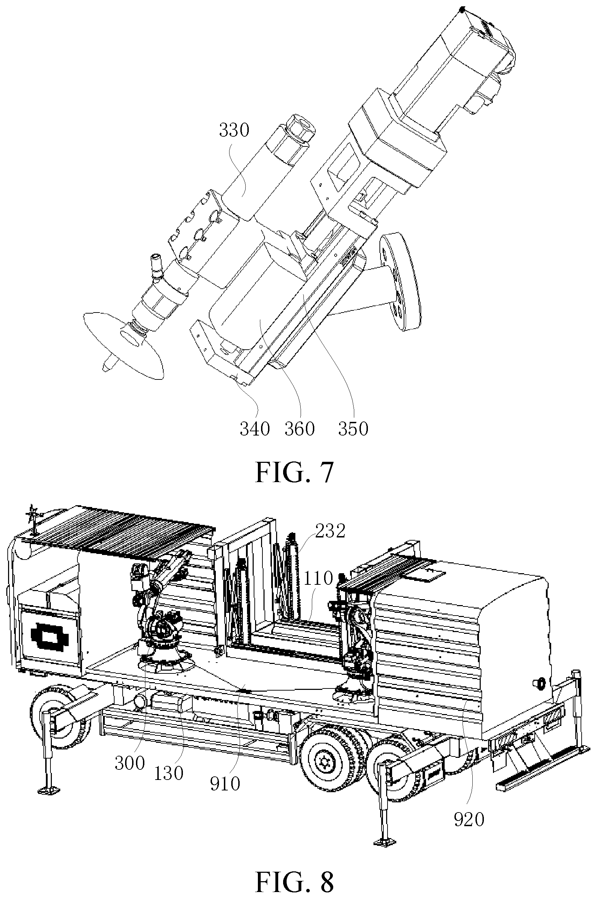

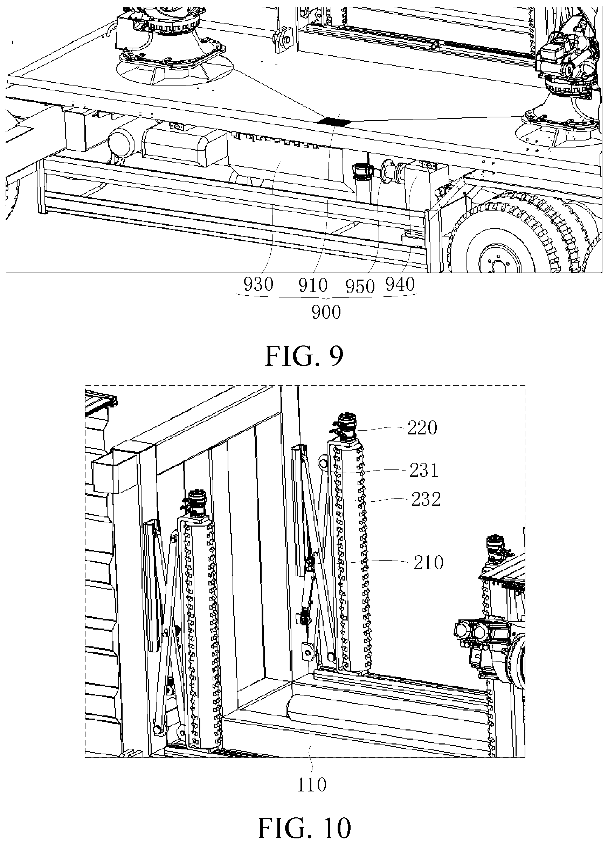

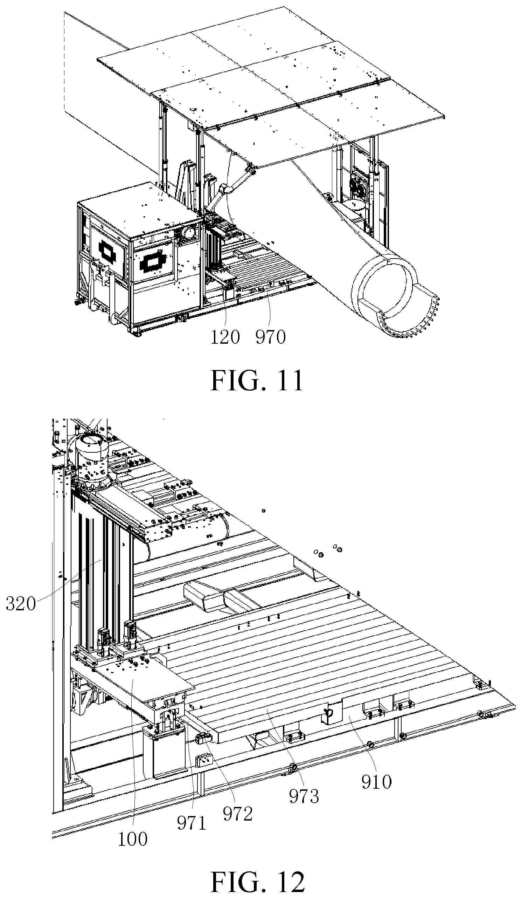

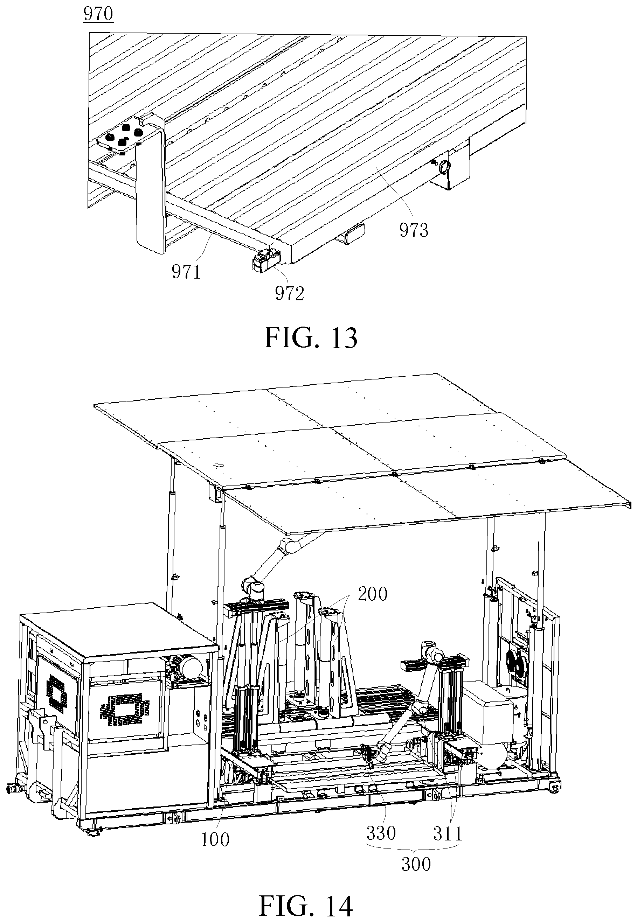

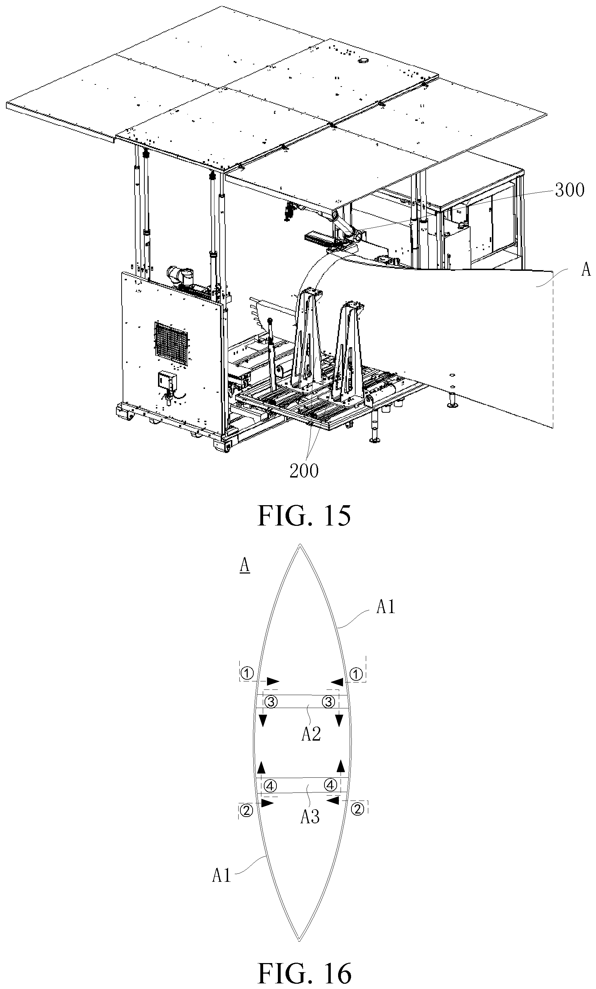

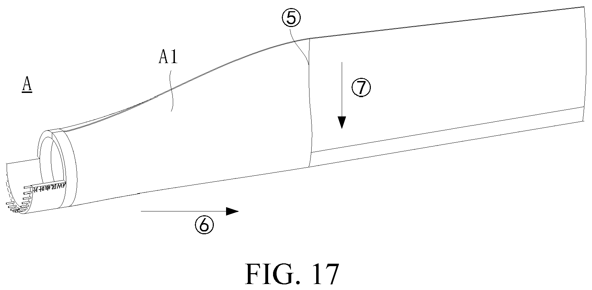

Referring to FIG. 1 to FIG. 17, an embodiment of this application discloses a blade cutting device. The disclosed blade cutting device includes a device frame 100, a conveying apparatus 200, and a cutting apparatus 300.

The device frame 100 is a basis for mounting at least some other components of the blade cutting device. The conveying apparatus 200 is a component configured to convey a blade A to be cut along a conveying direction. The cutting apparatus 300 is configured to cut and dismantle the blade A to be cut.

The device frame 100 includes a first frame body 110 and a second frame body 120. The first frame body 110 and the second frame body 120 are movably connected to enable the device frame 100 to switch between an expanded state and a collapsed state. The conveying apparatus 200 is disposed on the first frame body 110. The cutting apparatus 300 is disposed on the second frame body 120.

Specifically, the first frame body 110 and the second frame body 120 may be rotatably connected. The first frame body 110 is rotatable relative to the second frame body 120. The first frame body 110 may rotate to a position in the same plane as the second frame body 120, so that the device frame 100 is in the expanded state. Alternatively, the first frame body 110 may rotate to a position above the second frame body 120, so that the device frame 100 is in the collapsed state.

Certainly, the first frame body 110 and the second frame body 120 may be alternatively slidably connected or connected in a rolling manner. The first frame body 110 and the second frame body 120 may form a pull-type structure. When the device frame 100 is in the collapsed state, the first frame body 110 is stacked above the second frame body 120. When the device frame 100 is in the expanded state, the first frame body 110 may slide or roll relative to the second frame body 120, so that the first frame body 110 extends out of the second frame body 120. Certainly, the first frame body 110 and the second frame body 120 may be alternatively connected in another manner. Details are not described in this embodiment of this application.

When the device frame 100 is in the expanded state, the conveying apparatus 200 and the cutting apparatus 300 are spaced apart in an expansion plane of the device frame 100, the conveying apparatus 200 is configured to convey a blade A to be cut, and the cutting apparatus 300 is configured to cut the blade A to be cut.

When the device frame 100 is in the collapsed state, the conveying apparatus 200 moves with the first frame body 110 to the position above the second frame body 120. When the device frame 100 is in the collapsed state, the conveying apparatus 200 no longer conveys the blade A to be cut, and the cutting apparatus 300 also does not cut the blade A to be cut.

In the blade cutting device disclosed in this embodiment of this application, the device frame 100 is disposed as a structure including the first frame body 110 and the second frame body 120, and the first frame body 110 and the second frame body 120 are movably connected to enable the device frame 100 to switch between the expanded state and the collapsed state. The conveying apparatus 200 is disposed on the first frame body 110, and the cutting apparatus 300 is disposed on the second frame body 120, so that when the device frame 100 is in the expanded state, the conveying apparatus 200 and the cutting apparatus 300 are spaced apart in the expansion plane of the device frame 100, so that the conveying apparatus 200 may convey the blade A to be cut, and the cutting apparatus 300 may cut the blade A to be cut. When the device frame 100 is in the collapsed state, the conveying apparatus 200 may rotate with the first frame body 110 to the position above the second frame body 120, to avoid a large space occupied due to the expansion of the first frame body 110 and the second frame body 120, thereby facilitating transport of the blade cutting device.

When the device frame 100 is switched between the expanded state and the collapsed state, an operator may drive the first frame body 110 to move relative to the second frame body 120 manually or using a tool.

In another implementation, the blade cutting device may further include a frame drive mechanism 400. The frame drive mechanism 400 may be connected between the first frame body 110 and the second frame body 120. The frame drive mechanism 400 may be configured to drive the first frame body 110 to move relative to the second frame body 120 to enable the device frame 100 to switch between the expanded state and the collapsed state.

In the blade cutting device disclosed in this embodiment of this application, the frame drive mechanism 400 is disposed, the frame drive mechanism 400 is connected between the first frame body 110 and the second frame body 120, and the first frame body 110 is driven to move relative to the second frame body 120 through the frame drive mechanism 400, so that automation can be implemented when the device frame 100 switches between the expanded state and the collapsed state.

Specifically, the frame drive mechanism 400 may be a fluid drive mechanism. For example, the frame drive mechanism 400 may be a hydraulic drive mechanism, a pneumatic drive mechanism, or the like. For example, the frame drive mechanism 400 may be a hydraulic telescopic rod, a pneumatic telescopic rod, or the like. The fluid drive mechanism has a buffering effect when driving the first frame body 110 to move relative to the second frame body 120, to prevent the first frame body 110 from moving relative to the second frame body 120 too quickly and causing impacts. In addition, after the first frame body 110 is rotated in place relative to the second frame body 120, the buffering effect of the fluid drive mechanism further has the effect of keeping the first frame body 110 at a current position relative to the second frame body 120, so that the device frame 100 is kept in the collapsed state or the expanded state.

Certainly, the frame drive mechanism 400 may be a hydraulic telescopic rod, a pneumatic telescopic rod, or the like. The frame drive mechanism 400 may be alternatively a drive motor, a shape memory metal, or the like. The type of the frame drive mechanism 400 is not specifically limited in this embodiment of this application.

When the device frame 100 is in the expanded state, to enable the first frame body 110 to stably support the conveying apparatus 200 and the blade A to be cut, optionally, the device frame 100 may further include a leg 130. The leg 130 may be disposed at an end of the first frame body 110 facing away from the second frame body 120. When the device frame 100 is in the expanded state, the leg 130 supports a second end of the first frame body 110, and an end of the leg 130 facing away from the first frame body 110 may be configured to be supported on the ground or another fixed component.

In the blade cutting device disclosed in this embodiment of this application, the leg 130 is disposed at the second end of the first frame body 110, so that when the device frame 100 is in the expanded state, the leg 130 may support the second end of the first frame body 110, and the first frame body 110 may stably support the conveying apparatus 200 and the blade A to be cut.

When the device frame 100 is in the collapsed state, to make the first frame body 110 be stable above the second frame body 120, optionally, the device frame 100 may further include a locking mechanism 150. The locking mechanism 150 may be disposed on the second frame body 120. When the device frame 100 is in the collapsed state, the locking mechanism 150 is configured to lock the first frame body 110 to the second frame body 120, so that when the device frame 100 is in the collapsed state, the first frame body 110 is disposed more stably.

Specifically, the locking mechanism 150 may include a buckle. The first frame body 110 may be provided with a buckle fitting portion. The buckle may lock the first frame body 110 to the second frame body 120 through buckling with the buckle fitting portion. Certainly, the locking mechanism 150 may be alternatively a structure such as a bolt or a pin. A specific structure of the locking mechanism 150 is not limited in this embodiment of this application.

In an optional embodiment, the blade cutting device may further include a housing 600 and a column 140, the housing 600 may include a top plate 610 and two oppositely disposed side plates 620, the top plate 610 may be disposed above the second frame body 120 via the column 140, and the two side plates 620 may be respectively rotatably connected to two opposite end portions of the top plate 610. When the device frame 100 is in the expanded state, the two side plates 620 may be rotated relative to the top plate 610 to a position in a same plane as the top plate 610, and one of the two side plates 620 is opposite to the first frame body 110. When the device frame 100 is in the collapsed state, the two side plates 620, the top plate 610, and the second frame body 120 may define an accommodating space, to enable the first frame body 110, the conveying apparatus 200, and the cutting apparatus 300 to be located in the accommodating space.

In the blade cutting device disclosed in this embodiment of this application, the housing 600 and the column 140 are disposed. The housing 600 is disposed as a structure including the top plate 610 and the two oppositely disposed side plates 620, so that the top plate 610 may be disposed above the second frame body 120 via the column 140. The two side plates 620 may be respectively rotatably connected to two opposite end portions of the top plate 610, so that when the device frame 100 is in the expanded state, the two side plates 620 may be rotated relative to the top plate 610 to the position in the same plane as the top plate 610. One of the two side plates 620 is opposite to the first frame body 110, thereby protecting components disposed on the first frame body 110 and the second frame body 120 from above the first frame body 110 and the second frame body 120. When the device frame 100 is in the collapsed state, the two side plates 620, the top plate 610, and the second frame body 120 may define the accommodating space, to enable the first frame body 110, the conveying apparatus 200, and the cutting apparatus 300 to be located in the accommodating space, thereby making the structure of the blade cutting device more compact, and protecting components such as the first frame body 110, the conveying apparatus 200, and the cutting apparatus 300.

When the device frame 100 is in the expanded state, to provide a larger receiving space for the blade A to be cut, optionally, the column 140 may be a telescopic column. The column 140 may be fixedly disposed on the second frame body 120. The column 140 may support and guide the top plate 610. The blade cutting device may further include a lifting drive member 700, and the lifting drive member 700 may be disposed on the second frame body 120 and connected to the top plate 610. When the device frame 100 is in the expanded state, the lifting drive member 700 may drive the column 140 to extend to a first length via the top plate 610. When the device frame 100 is in the collapsed state, the lifting drive member 700 may drive the column 140 to extend to a second length via the top plate 610, where the first length is greater than the second length.

In the blade cutting device disclosed in this embodiment of this application, the lifting drive member 700 is disposed, and the column 140 is disposed as a telescopic column, so that when the device frame 100 is in the expanded state, the lifting drive member 700 drives the column 140 to extend to the first length via the top plate 610. When the device frame 100 is in the collapsed state, the lifting drive member 700 drives the column 140 to extend to the second length via the top plate 610, so that when the device frame 100 is in the expanded state, a larger receiving space may be provided for the blade A to be cut. When the device frame 100 is in the collapsed state, the overall structure of the blade cutting device is more compact.

When the device frame 100 is in the collapsed state, to better protect the conveying apparatus 200 and the cutting apparatus 300, optionally, the housing 600 may further include an end plate 630, and the blade cutting device may further include a control box 800. The end plate 630 and the control box 800 may be disposed opposite to each other and spaced apart on the second frame body 120. Both the conveying apparatus 200 and the cutting apparatus 300 may be connected to a control module in the control box 800. The control module may be configured to control the conveying apparatus 200 and the cutting apparatus 300, to perform corresponding conveyance and cutting operations. When the device frame 100 is in the collapsed state, the end plate 630 and the control box 800 are respectively located at two end portions of the top plate 610 that are connected between the two side plates 620, so that the two side plates 620, the top plate 610, the second frame body 120, the end plate 630, and the control box 800 jointly define the accommodating space.

In the blade cutting device disclosed in this embodiment of this application, the end plate 630 is disposed, and the control box 800 is used as a part defining the accommodating space, so that when the device frame 100 is in the collapsed state, the two side plates 620, the top plate 610, the second frame body 120, the end plate 630, and the control box 800 jointly define the accommodating space, thereby better protecting the conveying apparatus 200 and the cutting apparatus 300.

In an optional embodiment, the conveying apparatus 200 may include a first drive mechanism 210, a second drive mechanism 220, and two rotating assemblies 230. Each of the rotating assemblies 230 may include a mounting bracket 231 and a rotating body 232, the mounting bracket 231 may be disposed on the first frame body 110, the rotating body 232 may be rotatably disposed on the mounting bracket 231, and a conveying space is formed between the rotating bodies 232 of the two rotating assemblies 230. The first drive mechanism 210 may be connected to the mounting brackets 231 and configured to drive the mounting brackets 231 to move along the device frame 100, to drive the rotating bodies 232 of the two rotating assemblies 230 to clamp the blade A to be cut. The second drive mechanism 220 may be connected to the rotating bodies 232 and configured to drive the rotating bodies 232 to rotate, to drive the blade A to be cut to extend by a preset length along the conveying space, and the cutting apparatus 300 may be configured to cut a portion of the blade A to be cut that extends out of the conveying space.

The mounting bracket 231 is disposed on the device frame 100. The mounting bracket 231 is movably disposed on the device frame 100. The mounting bracket 231 may be movably disposed on the device frame 100, or may be rotatably disposed on the device frame 100. The rotating body 232 is rotatably disposed on the mounting bracket 231, and the conveying space is formed between the rotating bodies 232 of the at least two rotating assemblies 230. The conveying apparatus 200 conveys the blade A along the conveying direction in the conveying space, and the conveying space extends along the conveying direction. The cutting apparatus 300 is disposed on the device frame 100.

The first drive mechanism 210 may be disposed on the device frame 100, or may be disposed on another component of the blade cutting device, or may be independently mounted on the ground, or the like. An arrangement manner of the first drive mechanism 210 is not limited in this embodiment of this application. The first drive mechanism 210 is connected to the mounting brackets 231 and configured to drive the mounting brackets 231 to move along the device frame 100, to drive the rotating bodies 232 of the at least two rotating assemblies 230 to clamp the blade A.

Specifically, the first drive mechanism 210 may drive the mounting brackets 231 of the at least two rotating assemblies 230 to move relative to each other, so that the mounting brackets 231 of the two rotating assemblies 230 move toward or away from each other, and further, the mounting brackets 231 of the two rotating assemblies 230 drive the rotating bodies 232 to move toward or away from each other. Certainly, the first drive mechanism 210 may alternatively drive the mounting brackets 231 of the two rotating assemblies 230 to rotate about respective rotation axes, and rotation axes of the rotating bodies 232 are spaced apart from the rotation axes of the mounting brackets 231. When the first drive mechanism 210 drives the mounting brackets 231 of the two rotating assemblies 230 to rotate about the respective rotation axes, the mounting brackets 231 of the two rotating assemblies 230 drive the respective rotating bodies 232 to rotate about the rotation axes of the mounting brackets 231, so that the mounting brackets 231 of the two rotating assemblies 230 drive the rotating bodies 232 to move toward or away from each other. The first drive mechanism 210 and the second drive mechanism 220 may be hydraulic drive mechanisms, pneumatic drive mechanisms, drive motors, or the like. The types of the first drive mechanism 210 and the second drive mechanism 220 are not specifically limited in this embodiment of this application.

Specifically, when the mounting bracket 231 is movably disposed on the device frame 100, the first drive mechanism 210 may include a linear drive motor, each mounting bracket 231 may be correspondingly provided with a linear drive motor, and the linear drive motor may drive the mounting bracket 231 to move. Certainly, the first drive mechanism 210 may alternatively include a rotary drive motor and a transmission mechanism. A rotating shaft of the rotary drive motor may be connected to the mounting brackets 231 of the at least two rotating assemblies 230 by the transmission mechanism, so that one rotary drive motor may drive, through the transmission mechanism, the mounting brackets 231 of the at least two rotating assemblies 230 to move along the device frame 100.

When the mounting bracket 231 is rotatably disposed on the device frame 100, the first drive mechanism 210 may include a rotary drive motor. Each mounting bracket 231 may be correspondingly provided with a rotary drive motor. The rotary drive motor may drive the mounting bracket 231 to rotate. Certainly, the first drive mechanism 210 may alternatively include only one rotary drive motor, and one rotary drive motor may drive, through the transmission mechanism, the mounting brackets 231 of the at least two rotating assemblies 230 to rotate. Certainly, the first drive mechanism 210 may alternatively have another structure such as a hydraulic drive mechanism or a pneumatic drive mechanism. The structure of the first drive mechanism 210 is not specifically limited in this embodiment of this application.

The second drive mechanism 220 is connected to the rotating body 232. The second drive mechanism 220 is configured to drive the rotating body 232 to rotate. The second drive mechanism 220 is configured to drive the rotating body 232 to rotate about a rotation axis of the rotating body 232, to drive the blade A to extend by a preset length along the conveying space. The cutting apparatus 300 is configured to cut a portion of the blade A that extends out of the conveying space.

Specifically, the second drive mechanism 220 may include a plurality of rotary drive motors. The plurality of rotary drive motors may be correspondingly disposed on the mounting brackets 231. The rotary drive motors may drive the rotating bodies 232 on the corresponding mounting brackets 231 to rotate about the rotation axes of the rotating bodies 232. Certainly, the second drive mechanism 220 may be alternatively a structure including a linear drive motor and a transmission mechanism (such as a lead screw mechanism). The linear drive motor may drive, through the transmission mechanism, the rotating body 232 to rotate about the rotation axis of the rotating body 232. Certainly, the second drive mechanism 220 may alternatively have another structure such as a hydraulic drive mechanism or a pneumatic drive mechanism. The structure of the second drive mechanism 220 is not specifically limited in this embodiment of this application.

In a specific working process, the blade A may be placed in the conveying space using a manipulator or another auxiliary device. The first drive mechanism 210 drives the mounting brackets 231 to move, to drive the rotating bodies 232 of the at least two rotating assemblies 230 to clamp the blade A. When the blade A is in a clamped state, the second drive mechanism 220 drives the rotating bodies 232 to rotate, so that the rotating bodies 232 drive the blade A to extend by the preset length along the conveying space. After the blade A extends by the preset length along the conveying space, the cutting apparatus 300 cuts the portion of the blade A that extends out of the conveying space. After the cutting of the portion of the blade A that extends out of the conveying space is completed, the second drive mechanism 220 drives the rotating bodies 232 to rotate again, so that the rotating bodies 232 drive the blade A to extend by the preset length along the conveying space, and the cutting apparatus 300 cuts the portion of the blade A that extends out of the conveying space until the cutting of the entire blade A is completed.

In the blade cutting device disclosed in this embodiment of this application, the conveying apparatus 200 and the cutting apparatus 300 are disposed, and the conveying apparatus 200 is disposed as a structure including the first drive mechanism 210, the second drive mechanism 220, and the at least two rotating assemblies 230. Each of the rotating assemblies 230 is disposed as a structure including the mounting bracket 231 and the rotating body 232, the mounting bracket 231 is disposed on the device frame 100, and the rotating body 232 is rotatably disposed on the mounting bracket 231, so that the conveying space is formed between the rotating bodies 232 of the at least two rotating assemblies 230. When a blade A is fed into the conveying space, the first drive mechanism 210 drives the mounting brackets 231 to move along the device frame 100, to drive the rotating bodies 232 of the at least two rotating assemblies 230 to clamp the blade A. Further, the second drive mechanism 220 drives the rotating bodies 232 to rotate, to drive the blade A to extend by the preset length along the conveying space. The cutting apparatus 300 cuts the portion of the blade A that extends out of the conveying space. After the cutting is completed, the blade A may continue to be conveyed using the conveying apparatus 200. Because the blade cutting device disclosed in this embodiment of this application is used, during the cutting of the blade A, the blade cutting device does not need to be moved or the position of the blade A does not need to be adjusted using an external machine, thereby saving time for moving the blade cutting device or adjusting the position of the blade A using an external machine, and further improving the efficiency of cutting the blade A using the blade cutting device.

Specifically, a quantity of the at least two rotating assemblies 230 may be an even number or an odd number. The at least two rotating assemblies 230 may be distributed on two sides of the conveying space that are perpendicular to the conveying direction. For example, two rotating assemblies 230 may be provided, and the two rotating assemblies 230 may be symmetrically disposed on two sides of the conveying space. For another example, three rotating assemblies 230 may be provided. One of the rotating assemblies 230 is located on one side of the conveying space, and the other two rotating assemblies 230 are located on the other side of the conveying space. Certainly, another quantity of the rotating assemblies 230 may be alternatively provided. The quantity of the rotating assemblies 230 is not specifically limited in this embodiment of this application.

It needs to be noted that that the mounting brackets 231 of the at least two rotating assemblies 230 drive the rotating bodies 232 to move toward or away from each other means that the mounting bracket 231 of the rotating assembly 230 located on one side of the conveying space and the mounting bracket 231 of the rotating assembly 230 located on the other side of the conveying space drive the rotating bodies 232 to move toward or away from each other in a direction perpendicular to the conveying direction, and does not mean that the rotating bodies 232 of the rotating assemblies 230 located on the same side of the conveying space move toward or away from each other along the conveying direction.

Each rotating assembly 230 may include one mounting bracket 231 and one rotating body 232. Certainly, each rotating assembly 230 may alternatively include a plurality of mounting brackets 231 and a plurality of rotating bodies 232, and the plurality of mounting brackets 231 and the plurality of rotating bodies 232 of each rotating assembly 230 are in a one-to-one correspondence. The plurality of mounting brackets 231 of each rotating assembly 230 may be disposed at intervals in the conveying direction. The plurality of mounting brackets 231 of the at least two rotating assemblies 230 may be disposed in a one-to-one correspondence in the direction perpendicular to the conveying direction, and the rotating bodies 232 on the plurality of mounting brackets 231 of the at least two rotating assemblies 230 jointly define the conveying space. In the blade cutting device disclosed in this embodiment of this application, a specific conveying apparatus 200 is disclosed. The first drive mechanism 210 drives the mounting brackets 231 to move along the device frame 100, to drive the rotating bodies 232 of the two rotating assemblies 230 to clamp the blade A to be cut, and the second drive mechanism 220 drives the rotating bodies 232 to rotate, to drive the blade A to be cut to extend by the preset length along the conveying space, thereby implementing the conveyance of the blade A to be cut.

Certainly, the conveying apparatus 200 may alternatively have another structure. For example, the conveying apparatus 200 may include a manipulator, and the blade A to be cut may be clamped and conveyed using the manipulator. The conveying apparatus 200 may alternatively have another structure. A specific structure of the conveying apparatus 200 is not limited in this embodiment of this application.

In an optional embodiment, a force exerted to clamp the blade A by the rotating bodies 232 driven by the first drive mechanism 210 via the mounting brackets 231 may vary based on a variation of the thickness of the blade A. For example, the first drive mechanism 210 may include a drive spring. The drive spring may drive, under an elastic force, the mounting brackets 231 to drive the rotating bodies 232 to clamp the blade A. In a thin region of the blade A, the elastic force applied by the first drive mechanism 210 is small, and the force exerted to clamp the blade A by the rotating bodies 232 is also small. In a thick region of the blade A, the elastic force applied by the first drive mechanism 210 is small, and the force exerted to clamp the blade A by the rotating bodies 232 is also large. The first drive mechanism 210 is disposed as a structure including the drive spring, so that the structure of the first drive mechanism 210 is relatively simple.

To make the force exerted to clamp the blade A by the rotating bodies 232 more stable, optionally, the first drive mechanism 210 may be a constant-pressure drive mechanism, and in a process in which the blade A extends by the preset length along the conveying space, the force exerted to clamp the blade A by the rotating bodies 232 driven by the first drive mechanism 210 via the mounting brackets 231 may remain at the preset pressure. The preset pressure may be adjusted based on an actual application environment, and is not limited to a particular value.

Specifically, the first drive mechanism 210 may include a drive body and a pressure sensor. The drive body may be connected to the pressure sensor. The pressure sensor may be disposed on the mounting bracket 231. When the rotating bodies 232 clamp the blade A, the pressure sensor may be in contact with a surface of the blade A. The drive body may drive, based on a pressure detected by the pressure sensor, the mounting bracket 231 to move, so that the pressure detected by the pressure sensor remains at the preset pressure. Therefore, the force exerted to clamp the blade A by the rotating bodies 232 remains at the preset pressure. It needs to be noted that when the pressure sensor is disposed, it needs to be met that the pressure detected by the pressure sensor is equal to the force exerted to clamp the blade A by the rotating bodies 232.

Certainly, the first drive mechanism 210 may be alternatively a hydraulic drive mechanism or a pneumatic drive mechanism. A fluid pressure input by the hydraulic drive mechanism or the pneumatic drive mechanism has a correspondence with the force exerted to clamp the blade A by the rotating bodies 232. In a process in which the blade A extends by the preset length along the conveying space, the fluid pressure input by the hydraulic drive mechanism or the pneumatic drive mechanism may be controlled to remain constant, so that the force exerted to clamp the blade A by the rotating bodies 232 remains at the preset pressure. Certainly, the first drive mechanism 210 may be alternatively another type of constant-pressure drive mechanism. The type of the first drive mechanism 210 is not specifically limited in this embodiment of this application.

In the blade cutting device disclosed in this embodiment of this application, the first drive mechanism 210 is disposed as the constant-pressure drive mechanism, and in the process in which the blade A extends by the preset length along the conveying space, the force exerted to clamp the blade A by the rotating bodies 232 driven by the first drive mechanism 210 via the mounting brackets 231 remains at the preset pressure, thereby making the force exerted to clamp the blade A by the rotating bodies 232 more stable.

When the mounting bracket 231 is movably disposed on the device frame 100, to make movement of the mounting bracket 231 along the device frame 100 more stable, optionally, the device frame 100 may be provided with a guide rail 150, and an extension direction of the guide rail 150 may be perpendicular to the conveying direction of the blade A in the conveying space. The mounting bracket 231 may be provided with a guide rail engaging portion 231a. The guide rail engaging portion 231a may be disposed on the guide rail 150. The guide rail engaging portion 231a may be in guiding engagement with the guide rail 150 in the extension direction of the guide rail 150. The mounting bracket 231 may move along the device frame 100 through guiding engagement between the guide rail engaging portion 231a and the guide rail 150, to drive the rotating body 232 to clamp the blade A.

In the blade cutting device disclosed in this embodiment of this application, the guide rail 150 is disposed on the device frame 100, and the guide rail engaging portion 231a is disposed on the mounting bracket 231, so that the mounting bracket 231 may move along the device frame 100 through guiding engagement with the guide rail 150 via the guide rail engaging portion 231a, thereby making movement of the mounting bracket 231 along the device frame 100 more stable, and further making the rotating bodies 232 more stable when clamping the blade A.

When the blade A is fed into the conveying space, the bottom of the blade A may be supported by the device frame 100, and in a process in which the blade A extends by the preset length along the conveying space, the bottom of the blade A may be in sliding fit with the device frame 100.

To improve the smoothness of conveyance of the blade A in the conveying space, optionally, the conveying apparatus 200 may further include an auxiliary conveying assembly 240, the auxiliary conveying assembly 240 may include an auxiliary base 241 and an auxiliary roller 242, the auxiliary base 241 may be disposed on the device frame 100, the auxiliary roller 242 may be rotatably disposed on the auxiliary base 241 about a first axis, an extension direction of the first axis is perpendicular to a conveying direction of the blade A in the conveying space, and the auxiliary roller 242 is configured to be in rolling engagement with the blade A in the conveying direction when the blade A is fed into the conveying space. The auxiliary roller 242 is configured to be in supporting engagement with the bottom of the blade A, and in a process in which the blade A extends by the preset length along the conveying space, the auxiliary roller 242 is in rolling engagement with the bottom of the blade A.

In the blade cutting device disclosed in this embodiment of this application, the auxiliary conveying assembly 240 is disposed, and the auxiliary conveying assembly 240 is disposed as a structure including the auxiliary base 241 and the auxiliary roller 242, so that the auxiliary base 241 is disposed on the device frame 100, and the auxiliary roller 242 is rotatably disposed on the auxiliary base 241 about the first axis. In a process in which the blade A extends by the preset length along the conveying space, the auxiliary roller 242 is in rolling engagement with the bottom of the blade A, thereby helping improve the smoothness of conveyance of the blade A in the conveying space, and also mitigating wear caused by movement of the blade A.

Specifically, the auxiliary roller 242 may be disposed in the conveying space, thereby facilitating compactness of the blade cutting device. In another implementation, the conveying apparatus 200 may include a first auxiliary conveying assembly 240a and a second auxiliary conveying assembly 240b, and the first auxiliary conveying assembly 240a and the second auxiliary conveying assembly 240b may be respectively disposed on two sides of the conveying space in the conveying direction.

In the blade cutting device disclosed in this embodiment of this application, the first auxiliary conveying assembly 240a and the second auxiliary conveying assembly 240b are respectively disposed on two sides of the conveying space in the conveying direction, so that a large auxiliary conveying assembly 240 cannot be disposed because the conveying space is small. In addition, the first auxiliary conveying assembly 240a and the second auxiliary conveying assembly 240b are respectively disposed on two sides of the conveying space, so that a span of the first auxiliary conveying assembly 240a and the second auxiliary conveying assembly 240b is large, thereby helping improve stability of supporting the blade A.

In an optional embodiment, the blade cutting device may further include a detection apparatus and a first control apparatus, the detection apparatus may be disposed on the device frame 100, the detection apparatus may be configured to detect whether the blade A extends by the preset length along the conveying space, and the detection apparatus and the second drive mechanism 220 are both connected to the first control apparatus. When the detection apparatus detects that the blade A extends by the preset length along the conveying space, the first control apparatus may control the second drive mechanism 220 to stop driving the rotating bodies 232.

Specifically, the detection apparatus may be a photoelectric sensor, a pressure sensor, a travel switch, or the like. The type of the detection apparatus is not specifically limited in this embodiment of this application.

In the blade cutting device disclosed in this embodiment of this application, the detection apparatus and the first control apparatus are disposed, so that in the process in which the blade A extends along the conveying space in the conveying direction, the detection apparatus may detect whether the blade A extends by the preset length along the conveying space. When it is detected that the blade A extends by the preset length along the conveying space, the first control apparatus controls the second drive mechanism 220 to stop driving rotation of the rotating bodies 232, to ensure that each time the blade A is conveyed, the length by which the blade A extends along the conveying space remains the same, thereby facilitating subsequent processing on the blade A.

The movement of the mounting brackets 231 driven by the first drive mechanism 210 and the rotation of the rotating bodies 232 driven by the second drive mechanism 220 may be controlled by an operator. To implement automation of the blade cutting device, optionally, the blade cutting device may further include the first control apparatus. The first drive mechanism 210, the second drive mechanism 220, and the cutting apparatus 300 may all be connected to the first control apparatus. When the blade A is fed into the conveying space, the first control apparatus is configured to control the first drive mechanism 210 to drive the mounting brackets 231 to move along the device frame 100, to drive the rotating bodies 232 of the at least two rotating assemblies 230 to clamp the blade A. When the rotating bodies 232 of the at least two rotating assemblies 230 clamp the blade A, the first control apparatus is configured to control the second drive mechanism 220 to drive the rotating bodies 232 to rotate, to drive the blade A to extend by the preset length along the conveying space. When the blade A extends out of the conveying space by the preset length, the first control apparatus is configured to control the cutting apparatus 300 to cut the portion of the blade A that extends out of the conveying space.

In the blade cutting device disclosed in this embodiment of this application, a control apparatus is disposed, so that the first drive mechanism 210, the second drive mechanism 220, and the cutting apparatus 300 may all be connected to the first control apparatus, so that the control apparatus controls the first drive mechanism 210 to drive the mounting bracket 231 to move, controls the second drive mechanism 220 to drive the rotating body 232 to rotate, and controls the cutting apparatus 300 to cut the portion of the blade A that extends out of the conveying space, thereby improving automation of the blade cutting device.

An embodiment of this application provides a specific cutting apparatus 300. The cutting apparatus 300 may include an omnidirectional mobile robotic arm 310, a lifting mechanism 320, and a cutting body 330. The lifting mechanism 320 may be disposed on the second frame body 120 and connected to the omnidirectional mobile robotic arm 310, the lifting mechanism 320 may be configured to drive the omnidirectional mobile robotic arm 310 to lift, and the omnidirectional mobile robotic arm 310 may be connected to the cutting body 330.

It needs to be noted that the omnidirectional mobile robotic arm 310 is a robotic arm that can freely move in any direction, and can implement horizontal forward, backward, left, and right movements or even rotation without changing an orientation of the robotic arm. The structure and principle of implementing the omnidirectional mobile robotic arm 310 are existing technologies, and details are not described herein again.

In the blade cutting device disclosed in this embodiment of this application, the cutting apparatus 300 is disposed as a structure including the omnidirectional mobile robotic arm 310, the lifting mechanism 320, and the cutting body 330, so that the lifting mechanism 320 may drive the omnidirectional mobile robotic arm 310 to move up and down, and the omnidirectional mobile robotic arm 310 drives the cutting body 330 to move. Therefore, under engagement of the lifting mechanism 320 and the omnidirectional mobile robotic arm 310, the movement of the cutting body 330 is more flexible, thereby facilitating cutting of the blade A to be cut.

Specifically, the cutting apparatus 300 may be a waterjet cutting apparatus, and the cutting body 330 may be a waterjet cutting head. A working principle of the waterjet cutting apparatus is: pressurizing water to 200 MPa to 400 MPa to endow the water with tremendous pressure energy, delivering the water to a nozzle with a very small orifice, adding and mixing abrasive material, ejecting the mixture at a speed exceeding twice the speed of sound, and achieving cutting through the erosive action of solid abrasive material, the shearing action of water on the material, and the micro-machining action of abrasive material on the cutting surface.

It needs to be noted that a specific structure and principle of the waterjet cutting apparatus are existing technologies, and details are not described in this embodiment of this application again. In the blade cutting device disclosed in this embodiment of this application, the cutting apparatus 300 is disposed as a waterjet cutting apparatus, and the cutting body 330 is a waterjet cutting head, thereby facilitating a smooth cut on the blade A, a high cutting speed, low noise, and no generation of heat, dust, and gas in a cutting process.

Certainly, the cutting apparatus 300 may be alternatively a chain arm saw, a laser cutting apparatus, or the like, and the cutting body 330 may be correspondingly a chain, a laseremitting apparatus, or the like. The type of the cutting apparatus 300 is not specifically limited in this embodiment of this application.

Certainly, the cutting apparatus 300 may be alternatively a structure including the cutting body 330, a movable slide table, and a lifting slide table. The movable slide table may be movably disposed on the second frame body 120, the lifting slide table may be disposed on the movable slide table, and the cutting body 330 may be disposed on the lifting slide table. When the cutting apparatus 300 cuts the blade A to be cut, the movable slide table drives the lifting slide table and the cutting body 330 to move by a preset feed stroke each time. After the movable slide table drives the lifting slide table and the cutting body 330 to move by the preset feed stroke, the lifting slide table drives the cutting body 330 to move up and down to cut the blade A. After cutting at a current position is completed, the movable slide table drives the lifting slide table and the cutting body 330 to move by the preset feed stroke again, and the lifting slide table drives the cutting body 330 to move up and down to cut the blade A to be cut until cutting of the portion of the blade A to be cut that extends by the preset length along the conveying space is completed. Certainly, the cutting apparatus 300 may alternatively have another structure, and details are not described in this embodiment of this application again.

Because the blade A has an irregular structure, when cutting is performed at different positions of the blade A, cutting paths of the cutting are different. To accurately obtain the cutting path for the blade A, optionally, the cutting apparatus 300 may further include a scanning apparatus 340 and a second control apparatus. The omnidirectional mobile robotic arm 310, the lifting mechanism 320, the cutting body 330, and the scanning apparatus 340 may all be connected to the second control apparatus. The scanning apparatus 340 may be configured to scan a portion of the blade A that extends out of a conveying space, and the second control apparatus may determine a cutting path based on scanning information of the scanning apparatus 340, and control the lifting mechanism 320 and the omnidirectional mobile robotic arm 310 to drive the cutting body 330 to cut the blade A along the cutting path.

Specifically, the scanning apparatus 340 may be a visual scanning apparatus. For example, the scanning apparatus 340 may include a camera, and the camera may be configured to photograph and scan the portion of the blade A that extends out of the conveying space, to determine an external feature of the blade A. Certainly, the scanning apparatus 340 may be a radar recognition apparatus. The radar recognition apparatus may emit an electromagnetic wave (radar wave), receive a reflected signal, and determine the external feature of the blade A by analyzing a time delay and strength of the reflected signal. Scanning information includes the external feature of the blade A (for example, information such as a height, a thickness, and a curvature of the blade). The second control apparatus may automatically obtain, based on comparison between the scanning information and preset blade information, the cutting path for the portion of the blade A that extends out of the conveying space. The preset blade information (for example, information such as a height, a thickness, and a curvature of the blade) has a preset correspondence with the cutting path, and is preset in the second control apparatus.

In the blade cutting device disclosed in this embodiment of this application, the scanning apparatus 340 and the second control apparatus are disposed, the scanning apparatus 340 may scan a portion of the blade A that extends out of a conveying space, and the second control apparatus determines a cutting path based on scanning information of the scanning apparatus 340, and controls the lifting mechanism 320 and the omnidirectional mobile robotic arm 310 to drive the cutting body 330 to cut the blade A along the cutting path. An operator may optimize a preset cutting path to improve the efficiency of cutting the blade A by the cutting body 330.

To reduce a quantity of components of the cutting apparatus 300, optionally, the blade cutting device may further include a first control apparatus. The scanning apparatus 340 may be connected to the first control apparatus. The scanning apparatus 340 may scan the blade A in a process in which the blade A is conveyed along the conveying space. In this case, the scanning information obtained by the scanning apparatus 340 may include a movement distance of the blade A in the conveying direction. The first control apparatus may determine, based on the movement distance of the blade A in the conveying direction, whether the blade A extends by the preset length along the conveying space. Therefore, another check apparatus configured to detect the length by which the blade A extends along the conveying space does not need to be separately disposed, thereby reducing the quantity of components of the cutting apparatus 300.

The cutting apparatus 300 may be a waterjet cutting apparatus, and the cutting body 330 may be a waterjet cutting head. The blade cutting device may further include a wastewater collection module 900, and the wastewater collection module 900 may include a water receiving tray 910 and a wastewater tank 920. The water receiving tray 910 may be configured to collect wastewater generated when the waterjet cutting head cuts the blade A. The wastewater tank 920 is configured to store the wastewater collected by the water receiving tray 910.

It needs to be noted that a working principle of the waterjet cutting apparatus 300 is: pressurizing water to 200 MPa to 400 MPa to endow the water with tremendous pressure energy, delivering the water to a nozzle with a very small orifice, adding and mixing abrasive material, ejecting the mixture at a speed exceeding twice the speed of sound, and achieving cutting through the erosive action of solid abrasive material, the shearing action of water on the material, and the micro-machining action of abrasive material on the cutting surface.

The water receiving tray (910) may be disposed on the device frame (100) and may be located below the waterjet cutting head, and the wastewater tank (920) may be disposed on the device frame (100) and may be connected to the water receiving tray (910).

The wastewater generated in the process in which the waterjet cutting head cuts the blade A falls into the water receiving tray 910 located below the waterjet cutting head. The water receiving tray 910 channels the wastewater into the wastewater tank 920, thereby collecting the wastewater.

In the blade cutting device disclosed in this embodiment of this application, the water receiving tray 910 and the wastewater tank 920 are disposed, the water receiving tray 910 is disposed below the waterjet cutting head, and the wastewater generated when the waterjet cutting head cuts the blade A may be collected in the wastewater tank 920 using the water receiving tray 910, thereby avoiding environmental pollution caused by wastewater generated in the process in which the waterjet cutting head cuts the blade A.

When collecting the wastewater, the water receiving tray 910 collects the wastewater generated in the process in which the waterjet cutting head cuts the blade A, and also collects waste material generated by cutting the blade A. If the wastewater and the waste material are directly discharged to the wastewater tank 920 together, it is likely to cause pipeline clogging. To mitigate pipeline clogging, optionally, the wastewater collection module 900 may further include a settling tank 930 and a water pump 940. The settling tank 930 may be disposed on the device frame 100, and the water receiving tray 910, the settling tank 930, the water pump 940, and the wastewater tank 920 may be sequentially connected. The settling tank 930 may be a device for separating the wastewater and the waste material.

In the blade cutting device disclosed in this embodiment of this application, the settling tank 930 and the water pump 940 are disposed, so that the water receiving tray 910, the settling tank 930, the water pump 940, and the wastewater tank 920 may be sequentially connected, and the wastewater and the waste material collected by the water receiving tray 910 enter the settling tank 930 together. After the wastewater and the waste material are separated in the settling tank 930, the water pump 940 draws the wastewater in the settling tank 930 to the wastewater tank. The separated waste material in the settling tank 930 may be periodically processed, so that pipeline clogging by the waste material may be mitigated, and entry of the waste material into the water pump 940 may be reduced, thereby protecting the water pump 940.

In an optional embodiment, the wastewater collection module 900 may further include a first filtering apparatus 950, and the first filtering apparatus 950 may be disposed between the settling tank 930 and the water pump 940. The first filtering apparatus 950 can filter out waste material having a large size. The first filtering apparatus 950 may be a filter mesh, filter cotton, or the like. Selection of the first filtering apparatus 950 is not specifically limited in this embodiment of this application.

In the blade cutting device disclosed in this embodiment of this application, the first filtering apparatus 950 is disposed between the settling tank 930 and the water pump 940, so that the first filtering apparatus 950 can filter out waste material having a large size, thereby preventing the waste material having a large size from entering the water pump 940, and protecting the water pump 940.

Optionally, an avoidance hole 910 may be opened in the water receiving tray, the lifting mechanism 320 may pass through the avoidance hole and is disposed on the device frame 100, and a projection area of the water receiving tray 910 in a vertical direction may be greater than or equal to a projection area of a motion range of the waterjet cutting head in the vertical direction.

In the blade cutting device disclosed in this embodiment of this application, the projection area of the water receiving tray 910 in the vertical direction is set greater than or equal to the projection area of the motion range of the waterjet cutting head in the vertical direction, so that the wastewater generated in the entire motion range of the waterjet cutting head can be collected.

Specifically, the water receiving tray 910 may have a shape of a funnel, so that the wastewater may be channeled into a central region and then flow into the wastewater tank 920 or the settling tank 930, thereby preventing the wastewater from flowing out from an edge of the water receiving tray 910.

Certainly, the water receiving tray 910 may alternatively have a plate-like structure or another structure. A structure of the water receiving tray 910 is not specifically limited in this embodiment of this application.

In another embodiment, the wastewater collection module 900 may further include a water receiving tray drive mechanism. The water receiving tray drive mechanism may be disposed on the device frame 100 and connected to the water receiving tray 910. The water receiving tray drive mechanism may drive the water receiving tray 910 to move along a movement path of the waterjet cutting head, so that a projection of the waterjet cutting head in the vertical direction remains located in a projection of the water receiving tray 910 in the vertical direction. The projection area of the water receiving tray 910 in the vertical direction may be less than the projection area of the motion range of the waterjet cutting head in the vertical direction.

In the blade cutting device disclosed in this embodiment of this application, the water receiving tray drive mechanism is disposed, the water receiving tray drive mechanism is connected to the water receiving tray 910, and the water receiving tray drive mechanism may drive the water receiving tray 910 to move along the movement path of the waterjet cutting head, so that the projection of the waterjet cutting head in the vertical direction remains located in the projection of the water receiving tray 910 in the vertical direction, and the water receiving tray 910 may be disposed to be small, thereby facilitating a miniaturized design of the wastewater collection module 900.

Optionally, the blade cutting device may further include a second filtering apparatus 970. The second filtering apparatus 970 may be disposed on the device frame 100 and located above the water receiving tray 910. The second filtering apparatus 970 may be configured to filter out waste material of the blade A generated in a process in which the waterjet cutting head cuts the blade A, to reduce waste material that falls onto the water receiving tray 910, thereby further mitigating pipeline clogging due to entry of the waste material into pipelines below the water receiving tray 910.

Specifically, the second filtering apparatus 970 may be a filter mesh, filter cotton, or the like.

Optionally, the second filtering apparatus 970 may include a filter support 971, a conveying roller drive member 972, and a plurality of conveying rollers 973. The plurality of conveying rollers 973 may be sequentially arranged at intervals, and may be rotatably disposed on the filter support 971. Rotation axes of the plurality of conveying rollers 973 are parallel. Gaps between the plurality of conveying rollers 973 may be used for wastewater generated in a process in which the waterjet cutting head cuts the blade A to flow into the water receiving tray 910. The conveying roller drive member 972 may be connected to the plurality of conveying rollers 973 and configured to drive the plurality of conveying rollers 973 to rotate, so that the plurality of conveying rollers 973 transfer waste material of the blade A generated in the process in which the waterjet cutting head cuts the blade A out of the blade cutting device.

In the blade cutting device disclosed in this embodiment of this application, the second filtering apparatus 970 is disposed as a structure including the filter support 971, the conveying roller drive member 972, and the plurality of conveying rollers 973, so that gaps between the plurality of conveying rollers 973 allow wastewater generated in the process in which the waterjet cutting head cuts the blade A to flow into the water receiving tray 910. The conveying roller drive member 972 drives the plurality of conveying rollers 973 to rotate, so that the plurality of conveying rollers 973 transfer the waste material of the blade A generated in the process in which the waterjet cutting head cuts the blade A out of the blade cutting device, thereby avoiding accumulation of the waste material on the plurality of conveying rollers 973, and facilitating smooth flow of the wastewater into the water receiving tray 910.

Because the size of the blade A is large, the wind direction and wind force in the environment affect the stability of the blade A on the blade cutting device, to detect the wind direction and wind force in the environment in real time, optionally, the blade cutting device may further include a weather instrument 500. The weather instrument 500 may be disposed on the device frame 100. The weather instrument 500 may be configured to detect the wind direction and wind force in the environment in which the blade cutting device is located, thereby detecting the wind direction and wind force in the environment in real time, and further stop related operations when the wind direction and wind force in the environment greatly affect the blade A disposed on the blade cutting device.

Referring to FIG. 1 to FIG. 17, an embodiment of this application discloses a blade cutting method. The disclosed blade cutting method is performed based on a blade cutting device provided with a conveying space. The disclosed method includes the following steps:
S101: Convey a blade A, to enable the blade A to extend out of the conveying space by a preset length.

It needs to be noted that the blade A may be conveyed by using the conveying apparatus 200 of the blade cutting device.

S102: Scan an output portion of the blade A that extends out of the conveying space, and obtain scanning information.

Specifically, the scanning information may include external feature information of the blade A (for example, information such as a height, an overall thickness, and a curvature of the blade).

S103: Determine the cutting path for the output portion based on the scanning information.

It needs to be noted that the blade cutting device may be preset with preset blade information (for example, information such as a height, an overall thickness, and a curvature of the blade), and may automatically obtain, based on comparison between the scanning information and the preset blade information, the cutting path for the portion of the blade A that extends along the conveying space.

S104: Cut the output portion along the cutting path.

In the blade cutting method disclosed in this embodiment of this application, the blade A is conveyed, the blade A extends by the preset length along the conveying space, the output portion of the blade A that extends out of the conveying space is scanned, and the scanning information is obtained, so that the cutting path for the portion of the blade A that extends out of the conveying space can be automatically obtained based on the scanning information, and the output portion can be cut along the cutting path. Conveyance, scanning, determining of the cutting path for the blade A and cutting of the blade are all automatic, thereby effectively improving the efficiency of cutting the blade.

Optionally, the disclosed blade cutting device includes a device frame 100, a conveying apparatus 200, and a cutting apparatus 300.

The device frame 100 is a basis for mounting at least some other components of the blade cutting device. The conveying apparatus 200 is a component configured to convey a blade A along a conveying direction. The cutting apparatus 300 is configured to cut and dismantle the blade A.

The conveying apparatus 200 is disposed on the device frame 100, the conveying apparatus 200 is provided with a conveying space, and the blade A may be conveyed in the conveying space. The cutting apparatus 300 includes a drive module 311, a cutting body 320, and a scanning apparatus 330, the drive module 311 is disposed on the device frame 100, the cutting body 320 is connected to the drive module 311, and the drive module 311 may drive the cutting body 320 to move to cut the output portion of the blade A.

The drive module 311 may include an omnidirectional mobile robotic arm and a lifting mechanism, the omnidirectional mobile robotic arm may be disposed on the lifting mechanism, the cutting body 320 may be disposed on the omnidirectional mobile robotic arm, and the lifting mechanism may drive, through the omnidirectional mobile robotic arm, the cutting body 320 to move up and down. The omnidirectional mobile robotic arm 310 is a robotic arm that can freely move in any direction, and can implement horizontal forward, backward, left, and right movements or even rotation without changing an orientation of the robotic arm. Certainly, the drive module 311 may be alternatively a structure in engagement with the movable slide table and the lifting slide table, and the like. The structure of the drive module 311 is not limited in this embodiment of this application.

The cutting body 320 may be a waterjet cutting apparatus, or may be a chain arm saw, a laser cutting apparatus, or the like. The type of the cutting body 320 is not limited in this embodiment of this application.

The scanning apparatus 330 may scan a portion of the blade A that extends out of the conveying space. The scanning apparatus 330 may be a visual scanning apparatus. For example, the scanning apparatus 330 may include a camera, and the camera may be configured to photograph and scan the portion of the blade A that extends out of the conveying space, to determine an external feature of the blade A. Certainly, the scanning apparatus 330 may be a radar recognition apparatus. The radar recognition apparatus may emit an electromagnetic wave (radar wave), receive a reflected signal, and determine the external feature of the blade A by analyzing a time delay and strength of the reflected signal. Scanning information includes the external feature information of the blade A (for example, information such as a height, an overall thickness, and a curvature of the blade).

The disclosed method includes the following steps:
S201: Control the conveying apparatus 200 to convey the blade A, to enable the blade A to extend out of the conveying space by the preset length.
S202: Control the scanning apparatus 330 to scan an output portion of the blade A that extends out of the conveying space, and obtain scanning information.

Specifically, the scanning information may include external feature information of the blade A (for example, information such as a height, an overall thickness, and a curvature of the blade).

S203: Determine the cutting path for the output portion based on the scanning information.

It needs to be noted that the blade cutting device may be preset with preset blade information (for example, information such as a height, an overall thickness, and a curvature of the blade), and may automatically obtain, based on comparison between the scanning information and the preset blade information, the cutting path for the portion of the blade A that extends out of the conveying space.

S204: Control the drive module 311 to drive the cutting body 320 to cut the output portion along the cutting path.

In the blade cutting method disclosed in this embodiment of this application, the conveying apparatus 200 is controlled to convey the blade A, the blade A extends by the preset length along the conveying space, the scanning apparatus 330 may scan the output portion of the blade A that extends out of the conveying space, and the scanning information is obtained, so that the cutting path for the portion of the blade A that extends out of the conveying space is automatically obtained based on based on the comparison between the scanning information and the preset blade information, and the drive module 311 may be controlled to drive the cutting body 320 to cut the output portion along the cutting path. Because the blade A is conveyed, scanned, and cut by the blade cutting device automatically, the efficiency of cutting the blade A by the blade cutting device can be effectively improved.

In an optional embodiment, the cutting apparatus 300 may further include a distance measuring module 360. The distance measuring module 360 may be disposed on the cutting body 320. The distance measuring module 360 may be configured to measure an actual distance between the cutting body 320 and the blade. The cutting body 320 is a waterjet cutting head. A specific structure and principle of the waterjet cutting head are existing technologies, and details are not described in this embodiment of this application again.

In the process of controlling the drive module 311 to drive the cutting body 320 to cut the output portion along the cutting path, the disclosed method may further include the following steps:
S301: Obtain an actual distance that is between the cutting body 320 and the blade A and that is measured by the distance measuring module 360.

It needs to be noted that the distance measuring module 360 may measure the actual distance between the cutting body 320 and the blade A in real time. The distance measuring module 360 may be a laser distance measuring module, or may be a radar distance measuring module. The type of the distance measuring module 360 is not specifically limited in this embodiment of this application.

S302: Control the drive module 311 to adjust the actual distance between the cutting body 320 and the blade A to be within a preset distance range.

Based on the actual distance that is between the cutting body 320 and the blade A that is measured by the distance measuring module 360, the drive module 311 may adjust the actual distance between the cutting body 320 and the blade A to be within the preset distance range, to avoid problems such as poor cutting efficiency or unsmooth cut caused by an excessively large or excessively small actual distance between the cutting body 320 and the blade A.

Optionally, the cutting apparatus 300 may further include a pressure detection module 350. The pressure detection module 350 may be disposed on the cutting body 320. The cutting body 320 may be a waterjet cutting head. The pressure detection module 350 may be configured to be in contact with the blade A and detect a contact pressure between the pressure detection module 350 and the blade A.

In the process of controlling the drive module 311 to drive the cutting body 320 to cut the output portion along the cutting path, the method may further include the following steps:
Step A1: Obtain the contact pressure between the pressure detection module 350 and the blade A.

It needs to be noted that in the process in which the cutting body 320 cuts the output portion along the cutting path, the pressure detection module 350 may move along with the cutting body 320, and a pressure detection end of the pressure detection module 350 may be in contact with the blade A, to obtain the contact pressure between the pressure detection module 350 and the blade A. After the contact pressure between the pressure detection module 350 and the blade A is obtained, the actual distance between the cutting body 320 and the blade A may be correspondingly known.

Step A2: Control the drive module 311 to adjust the contact pressure between the pressure detection module 350 and the blade A to be within a preset pressure range.

It needs to be noted that when the drive module 311 is controlled to adjust the contact pressure between the pressure detection module 350 and the blade A to be within the preset pressure range, it also means that the actual distance between the cutting body 320 and the blade A is within the preset distance range.

In the method disclosed in this embodiment of this application, the drive module 311 is controlled to adjust the contact pressure between the pressure detection module 350 and the blade A to be within the preset pressure range, so that the actual distance between the cutting body 320 and the blade A may be within the preset distance range, to avoid problems such as poor cutting efficiency or unsmooth cut caused by an excessively large or excessively small actual distance between the cutting body 320 and the blade A.

In an optional embodiment, after the determining the cutting path for the output portion based on the scanning information, the method may further include the following steps:
Step B1: Determine cutting thickness information of the output portion on the cutting path based on the scanning information.

It needs to be noted that the blade A includes two arc-shaped side plates A1, a first inner plate A2, and a second inner plate A3, the two arc-shaped side plates A1 define an inner cavity, the first inner plate A2 and the second inner plate A3 are disposed in the inner cavity, and the first inner plate A2 and the second inner plate A3 are both connected between the two arc-shaped side plates A1 and spaced apart. The cutting thickness information is the thicknesses of the arc-shaped side plate A1, the first inner plate A2, and the second inner plate A3.

Step B2: Determine, based on the cutting thickness information, a cutting speed for cutting the output portion along the cutting path.

It needs to be noted that after the cutting thickness information of the output portion on the cutting path is determined based on the scanning information, the cutting thickness information may be compared with preset cutting thickness information, so that the cutting speed that is of cutting along the cutting path by the cutting body 320 and that corresponds to the cutting thickness information can be automatically obtained. When the cutting body 320 cuts regions of different thicknesses of the blade A, cutting speeds corresponding to the regions of different thicknesses are also different. For example, in a region with a large thickness of the blade A, the cutting speed of the cutting body 320 is low, so that the region with a large thickness of the blade A can be cut thoroughly. In a region having a small thickness of the blade A, the cutting is relatively easy, so that the cutting speed of the cutting body 320 can be increased. A movement speed of the cutting body 320 is optimized, so that the effect and efficiency of cutting the blade A can be improved. The cutting speed is a speed at which the cutting body 320 moves along the cutting path.

According to the method disclosed in this embodiment of this application, the cutting thickness information of the output portion on the cutting path is determined based on the scanning information, and the cutting speed of the cutting body 320 may be determined based on the cutting thickness information, so that in the process of controlling the drive module 311 to drive the cutting body 320 to cut the output portion along the cutting path, the drive module 311 may be controlled to drive the cutting speed of the cutting body 320. The movement speed of the cutting body 320 is optimized, thereby improving the effect and efficiency of cutting the blade A.

In an optional embodiment, the controlling the conveying apparatus 200 to convey the blade A, to enable the blade A to extend out of the conveying space by the preset length includes:
Step C1: Control the conveying apparatus 200 to convey the blade A.
Step C2: Control the scanning apparatus 330 to detect an actual length by which the blade A extends out of the conveying space.

It needs to be noted that when obtaining the scanning information, the scanning apparatus 330 may scan the blade A in the process in which the conveying apparatus 200 conveys the blade A, or may scan the blade A after the conveying apparatus 200 completes conveyance of the blade A.

When the scanning apparatus 330 scans the blade A to obtain the scanning information in the process in which the conveying apparatus 200 conveys the blade A, a scanning speed of the scanning apparatus 330 may match a conveyance speed of the blade A, that is, within the same time, a distance by which the blade A is conveyed is the same as a distance by which the blade A is scanned by the scanning apparatus 330. Therefore, the scanning information obtained by scanning the blade A by the scanning apparatus 330 in the process in which the conveying apparatus 200 conveys the blade A may include the actual length by which the blade A is conveyed.

When the conveying apparatus 200 scans the blade A to obtain scanning information after completing conveyance of the blade A, in the process in which the conveying apparatus 200 conveys the blade A, the scanning apparatus 330 may scan the blade A along the conveying direction of the blade A, to obtain the actual length by which the blade A extends out of the conveying space.

Step C3: When the actual length is equal to the preset length, control the conveying apparatus 200 to stop conveying the blade A, so that the blade A extends by the preset length along the conveying space.

In the method disclosed in this embodiment of this application, the scanning apparatus 330 is controlled to detect the actual length by which the blade A extends out of the conveying space, so that the scanning apparatus 330 can be configured to obtain the scanning information, and can also detect the actual length by which the blade A extends out of the conveying space, enabling the scanning apparatus 330 to serve dual purposes. When the actual length is equal to the preset length, the conveying apparatus 200 is controlled to stop conveying the blade A, so that the blade A extends by the preset length along the conveying space, thereby making the length by which the blade A extends along the conveying space more accurate.

To improve the efficiency of cutting the blade A, optionally, two cutting apparatuses 300 may be provided. The two cutting apparatuses 300 may be respectively located on two sides of the conveying space in the conveying direction perpendicular to the conveying space. The scanning apparatus 330 may be disposed on the cutting body 320. Each cutting body 320 may be provided with the scanning apparatus 330.

The controlling the scanning apparatus 330 to scan an output portion of the blade A that extends out of the conveying space includes the following steps:
Step D1: Control the drive module 311 to drive the scanning apparatus 330 to scan a side of the blade A that faces the corresponding scanning apparatus 330.

In the method disclosed in this embodiment of this application, the drive module 311 is controlled to drive the scanning apparatus 330 to scan the side of the blade A that faces the corresponding scanning apparatus 330, so that the two scanning apparatuses 330 can simultaneously scan two sides of the blade A, and two cutting bodies 320 can simultaneously cut two sides of the blade A, thereby improving the efficiency of scanning and cutting the blade A.

Certainly, one cutting apparatus 300 may be provided. The drive module 311 drives the scanning apparatus 330 to scan the blade A in a circumferential direction around the blade A, and the drive module 311 drives the cutting body 320 to cut the blade A in the circumferential direction.

Optionally, the controlling the drive module 311 to drive the scanning apparatus 330 to scan a side of the blade A that faces the corresponding scanning apparatus 330 includes:
Step E1: Control the drive module 311 to drive the scanning apparatus 330 to move up and down to scan a side of the blade A that faces the corresponding scanning apparatus 330.

It needs to be noted that the scanning apparatus 330 may scan the blade A in the process in which the conveying apparatus 200 conveys the blade A, and the scanning apparatus 330 only needs to move up and down and does not need to move in the conveying direction.

In the method disclosed in this embodiment of this application, the drive module 311 is controlled to drive the scanning apparatus 330 to move up and down to scan the side of the blade A that faces the corresponding scanning apparatus 330, so that a movement distance of the scanning apparatus 330 is relatively short.

Specifically, the scanning apparatus 330 may include a visual sensor.

The controlling the scanning apparatus 330 to scan an output portion of the blade A that extends out of the conveying space, and obtaining scanning information includes:
Step F1: Control the visual sensor to scan the output portion, and obtain the scanning information.

In the method disclosed in this embodiment of this application, the manner of scanning the output portion using the visual sensor and obtaining the scanning information is beneficial to the accuracy of the scanning information.

In another implementation, the scanning apparatus 330 may include a radar.

The controlling the scanning apparatus 330 to scan an output portion of the blade A that extends out of the conveying space, and obtaining scanning information includes:
Step G1: Control the radar to scan the output portion, and obtain the scanning information.

In the method disclosed in this embodiment of this application, the manner of scanning the output portion using the radar and obtaining the scanning information makes the structure of the cutting apparatus 300 relatively simple.

Specifically, the cutting body 320 is a waterjet cutting head.

A working principle of the waterjet cutting head is: pressurizing water to 200 MPa to 400 MPa to endow the water with tremendous pressure energy, delivering the water to a nozzle with a very small orifice, adding and mixing abrasive material, ejecting the mixture at a speed exceeding twice the speed of sound, and achieving cutting through the erosive action of solid abrasive material, the shearing action of water on the material, and the micro-machining action of abrasive material on the cutting surface.

In the method disclosed in this embodiment of this application, the cutting body 320 is disposed as a structure of a waterjet cutting head, thereby facilitating a smooth cut on the blade A, a high cutting speed, low noise, and no generation of heat, dust, and gas in a cutting process.

In an optional embodiment, the blade A may include two arc-shaped side plates A1, a first inner plate A2, and a second inner plate A3, the two arc-shaped side plates A1 may define an inner cavity, the first inner plate A2 and the second inner plate A3 may be disposed in the inner cavity, the first inner plate A2 and the second inner plate A3 may be both connected between the two arc-shaped side plates A1 and spaced apart, the blade A is cut based on the cutting apparatus 300, two cutting apparatuses may be provided, and the two cutting apparatuses 300 may be respectively located on two sides of the two arc-shaped side plates A1.

The determining the cutting path for the output portion based on the scanning information includes the following steps:
Step H1: Determine a first cutting route, a second cutting route, a third cutting route, a fourth cutting route, and a fifth cutting route based on the scanning information, where the cutting path includes the first cutting route, the second cutting route, the third cutting route, the fourth cutting route, and the fifth cutting route.

The cutting the output portion along the cutting path includes:
Step H2: Cut the blade A for portions on a corresponding side of the blade A sequentially along the first cutting route, the second cutting route, the third cutting route, the fourth cutting route, and the fifth cutting route.

The first cutting route is a route that extends along the arc-shaped side plates A1 in a first direction and that is located on a side of the first inner plate A2 facing away from the second inner plate A3; the second cutting route is a route that extends along the arc-shaped side plates A1 in the first direction and that is located on a side of the second inner plate A3 facing away from the first inner plate A2; the third cutting route is a route that extends along the first inner plate A2 in the first direction and that is located at an end portion of the first inner plate A2; and the fourth cutting route is a route that extends along the second inner plate A3 in the first direction and that is located at an end portion of the second inner plate A3. The first direction may be the conveying direction in which the conveying apparatus 200 conveys the blade A. The fifth cutting route is a route that extends along a second direction and that connects a tail of the first cutting route, a tail of the second cutting route, a tail of the third cutting route, and a tail of the fourth cutting route. The tail of the cutting route is a tail of a movement path when the blade A is cut along the cutting route.

In the method disclosed in this embodiment of this application, the cutting path is divided into the first cutting route, the second cutting route, the third cutting route, the fourth cutting route, and the fifth cutting route, so that after the drive module 311 drives the cutting body 320 to cut a portion on a corresponding side of the blade A along the first cutting route, the second cutting route, the third cutting route, and the fourth cutting route in sequence, the cut portion of the blade A does not fall off, and then the cutting body 320 is driven to cut the blade A along the fifth cutting route, so that the cut portion of the blade A may fall off together.

To resolve technical problems in related technologies such as high handling costs, poor compatibility, low working efficiency, poor safety, and incapability of ensuring high-value recovery of glass fiber in resource utilization of decommissioned wind turbine blades, this application provides an apparatus for processing waste wind turbine blades, which can implement high-value recovery of glass fiber.

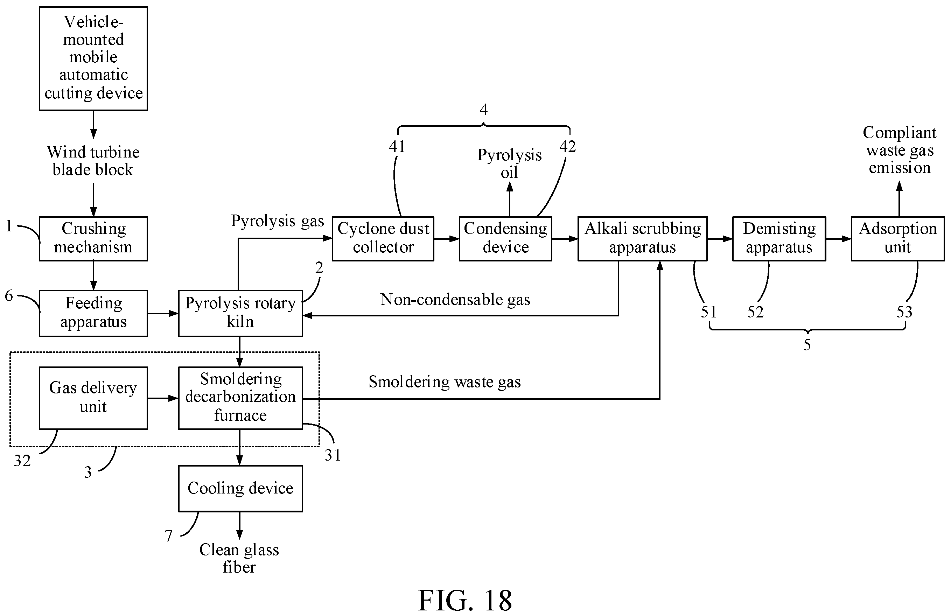

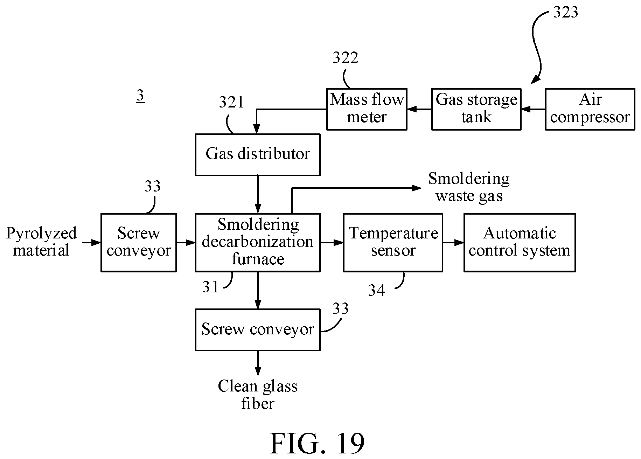

FIG. 18 is a block diagram of an apparatus for processing waste wind turbine blades according to an embodiment of this application. FIG. 19 is a block diagram of a smoldering system according to an embodiment of this application.

In some exemplary embodiments, as shown in FIG. 18 and FIG. 19, an apparatus for processing waste wind turbine blades is configured to process waste wind turbine blades and recycle the waste wind turbine blades, thereby improving resource utilization.

The apparatus for processing waste wind turbine blades includes a crushing mechanism 1, a pyrolysis rotary kiln 2, a smoldering system 3, an oil recovery system 4, and a waste gas processing system 5.

Before being crushed, waste wind turbine blades may be grabbed and fed by a manipulator, and are cut by a cutting robot robotic arm. The cutting robot robotic arm is, for example, a vehicle-mounted mobile automatic wind turbine blade cutting device. The entire waste wind turbine blade is cut into blade blocks in a transverse cutting and longitudinal cutting manner, to implement preliminary crushing and appropriately reduce the size of the raw material, thereby facilitating subsequent processing. The size of the blade blocks may be, for example, but is not limited to, 30 cm×30 cm, thereby facilitating crushing.

A cutting program may be set in advance, to implement automatic positioning and cutting, thereby implementing an automatic operation. A cutting manner is mainly a high-pressure waterjet cutting manner, thereby effectively improving cutting precision, structural performance at a cut of a waste wind turbine blade does not change, a cutting surface is smooth, and it is easy to implement a long-distance independent operation, making the operation more flexible and safer.

The cut waste wind turbine blade is conveyed into the crushing mechanism 1. The crushing mechanism 1 is, for example, a shredder. The crushing mechanism 1 is configured to crush the waste wind turbine blade to obtain fragments of approximately 50 mm, thereby facilitating pyrolysis recovery and the like. The crushing mechanism 1 may be, for example, a doubleshaft shredder or a single-shaft crusher, to break up the waste wind turbine blade into smaller particles, thereby facilitating subsequent processing and recycling. The crushing mechanism 1 can reduce the size of waste wind turbine blades, reduce storage and processing costs of the waste wind turbine blades, and can further separate recoverable material in the waste wind turbine blades, thereby facilitating resource recovery and reuse.

In some examples, as shown in FIG. 18 and FIG. 19, a feeding apparatus 6 is disposed, and the waste wind turbine blade in the crushing mechanism 1 is conveyed into the pyrolysis rotary kiln 2 through the feeding apparatus 6, to decompose the waste wind turbine blade. Certainly, another manner may also be used for transfer, and details are subject to actual situations.

The pyrolysis rotary kiln 2 is connected to the crushing mechanism 1, and performs pyrolysis on the crushed waste wind turbine blade. The pyrolysis rotary kiln 2 is of a rotary type, and can perform segmented heating, to decompose the waste wind turbine blade to different degrees. The waste wind turbine blade is mainly made of high-molecular polymers and balsa wood, and the high-molecular polymers are mainly epoxy resin, polyvinyl chloride (PVC), and the like. The first segment has, for example, a pyrolysis temperature of 200°C to 300°C, to allow for preferential thermal decomposition of the PVC. The second segment has, for example, a pyrolysis temperature of 450°C to 500°C, to perform thermal decomposition on the epoxy resin and perform a balsa wood carbonization process, thereby avoiding a problem of a load and a possible poor processing effect caused by a temperature increase to over 450°C.

In an embodiment, as shown in FIG. 18 and FIG. 19, an inert gas is introduced into the pyrolysis rotary kiln 2, and the inert gas is, for example, nitrogen, to provide a hypoxic or anoxic environment for the pyrolysis rotary kiln 2 to avoid a risk of fire or flash explosion during the heating process, thereby ensuring safe and stable operation of the device. Oxygen content may be controlled to be within 4% to prevent internal explosion, thereby reducing safety risks.

For example, a heating manner of the pyrolysis rotary kiln 2 may be electromagnetic heating, to accurately control a temperature and a temperature increase speed, thereby improving conversion efficiency. Alternatively, the heating manner may be resistance heating, gas heating, or the like, and details are subject to actual situations.

The rotary pyrolysis apparatus enables the material in the kiln to be more uniformly heated, and avoids a problem of deformation of the kiln body caused by uneven heating.

The smoldering system 3 is connected to the pyrolysis rotary kiln 2, to perform smoldering and carbon removal on the solid material after the waste wind turbine blade undergoes pyrolysis. A layer of pyrolytic carbon is adhered to glass fiber after the waste wind turbine blade undergoes pyrolysis. In this application, carbon removal is performed using the smoldering system 3, to restore black glass fiber to the original color, thereby ensuring that the high-value utilization and the performance of the glass fiber are not significantly reduced.

In some examples, as shown in FIG. 18 and FIG. 19, the smoldering system 3 includes a smoldering decarbonization furnace 31, a gas delivery unit 32, and a conveying portion 33. The smoldering decarbonization furnace 31 is provided with a feed end and a discharge end. The discharge end and the feed end are both connected to the conveying portion 33. The solid material generated after the waste wind turbine blade undergoes pyrolysis enters the smoldering decarbonization furnace 31 through the feed end to perform smoldering on the solid material. After smoldering of the solid material is completed, the solid material is discharged through the discharge end.

The conveying portion 33 is, for example, a screw conveyor, and has good sealing property, to prevent the glass fiber from being exposed to the environment for a long time, thereby avoiding harm to human bodies. The conveying portion 33 is rotated at a constant rotational speed using a spiral blade, to drive the material generated by the waste wind turbine blade to move forward, thereby implementing uniform conveyance of the material.

The pyrolyzed solid material is conveyed to the smoldering decarbonization furnace 31. The smoldering decarbonization furnace 31 does not need to require external pyrolysis, and implements a flameless, slow, and low-temperature burning process based on the porous medium property of glass fiber using the temperature of the pyrolyzed solid material and the gas conveyed by the gas delivery unit 32.

Oxidation of the pyrolytic carbon is an exothermic process, and the smoldering process requires less energy input than the pyrolysis process. After thermal balance is reached, the self-sustained burning of the solid material can be achieved by relying on heat released from the oxidation of the pyrolytic carbon.

The gas delivery unit 32 is in communication with the smoldering decarbonization furnace 31. The gas delivery unit 32 is configured to provide air. The gas delivery unit 32 includes, for example, a gas distributor 321, a mass flow meter 322, and an air supply portion 323. The air supply portion 323 includes, for example, a gas storage tank and an air compressor. The air supply portion 321 is connected to a gas distributor 321 through the mass flow meter 322, and the gas distributor 321 is connected to the smoldering decarbonization furnace 31.

The mass flow meter 322 can accurately control a flow rate of a gas, thereby ensuring normal smoldering. If the flow rate of the gas is excessively small, a contact area between oxygen and the material is reduced, leading to a reduced degree of smoldering, which is insufficient to offset a heat loss. If the flow rate of the gas is excessively large, high-temperature fumes generated by the reactions quickly pass through an unburned region of the material to perform preheating, leading to a heat loss. A flow rate at which the gas is conveyed by the gas delivery unit 32 may be, for example, controlled at 5 cm/s, to ensure normal self-maintained smoldering.

The gas distributor 321 may make air in the smoldering decarbonization furnace 31 more uniform, to ensure sufficient smoldering, thereby improving handling efficiency.

In this embodiment, as shown in FIG. 18 and FIG. 19, a temperature sensor 34 is disposed on the smoldering decarbonization furnace 31. The temperature of the material is monitored in real time using the temperature sensor 34, to control the speed of feeding and discharging the material. To implement continuous feeding and continuous discharging, the smoldering decarbonization furnace 31 needs to maintain a particular temperature, and cannot completely discharge the material, thereby preventing a temperature loss. A higher temperature indicates a better degree of smoldering. Because the temperature in the smoldering decarbonization furnace 31 is low, the performance of the glass fiber is not reduced to a large extent.

In this embodiment, as shown in FIG. 18 and FIG. 19, the apparatus for processing waste wind turbine blades further includes a cooling device 7, and the cooling device 7 is connected to the smoldering system 3. After the waste wind turbine blade undergoes carbon removal using the smoldering decarbonization furnace 31, the glass fiber is conveyed to the cooling device 7, and is cooled through indirect heat transfer, so that the material is cooled below 40°C to obtain clean glass fiber, thereby ensuring the performance of the glass fiber and implementing resource recovery.

The cooling device 7 includes, for example, a cooling barrel (not shown in the figure), a transmission apparatus (not shown in the figure), a roller support apparatus (not shown in the figure), a thrust roller apparatus (not shown in the figure), and a sealing apparatus (not shown in the figure). External cooling water performs indirect heat exchange with the material through a barrel wall of the cooling barrel, and enhances radiative heat transfer with the help of cooling lifting plates inside the cooling barrel. In addition, a rotational speed of the cooling barrel is adjustable, thereby cooling the material. The cooling device 7 is mainly configured to rapidly cool the pyrolyzed material, thereby meeting safety and process requirements.

In this embodiment, as shown in FIG. 18 and FIG. 19, the oil recovery system 4 is connected to the pyrolysis rotary kiln 2, to obtain liquid recovered oil. The recovered oil has a calorific value, and may be combusted to provide heat or upgraded to obtain chemical substances therefrom for resale, thereby implementing recycling.

In some examples, as shown in FIG. 18 and FIG. 19, the oil recovery system 4 includes a dust collector 41 and a condensing device 42 connected to the dust collector 41. The dust collector 41 is connected to the pyrolysis rotary kiln 2, and the condensing device 42 is connected to the waste gas processing system 5.

The dust collector 41 is, for example, a dust removal apparatus, and is configured to perform a rotating motion on a stream of dust-containing air. Dust particles are separated from the stream of air through a centrifugal force, and are captured on a wall. Further, the particles fall into an ash hopper under gravity, thereby recovering and processing the dust.

After the waste wind turbine blade undergoes the pyrolysis rotary kiln 2 for pyrolysis, a fraction gas of the waste wind turbine blade is a product of decomposition of the epoxy resin and dust, and the dirt is removed using the dust collector 41, thereby improving cleanliness. The liquid is obtained through condensation by the condensing device 42, to obtain liquid recovered oil.

The condensing device 42 includes, for example, a spray tower (not shown in the figure), a pressure relief system (not shown in the figure), a spray system (not shown in the figure), and a maintenance platform (not shown in the figure). The mixed gas generated through the pyrolysis is rapidly cooled in the spray tower, and a liquid phase (the pyrolysis oil) is separated after the cooling.

In this embodiment, as shown in FIG. 18 and FIG. 19, the waste gas processing system 5 is connected to any one of the smoldering system 3, the oil recovery system 4, and the pyrolysis rotary kiln 2, to process waste gas, thereby avoiding pollution to a natural environment.

In some examples, the waste gas processing system 5 includes an alkali scrubbing apparatus 51, a demisting apparatus 52, and an adsorption unit 53. The alkali scrubbing apparatus 51 is connected to the adsorption unit 53 through the demisting apparatus 52.

The alkali scrubbing apparatus 51 is separately connected to the oil recovery system 4 and the smoldering system 3.

The alkali scrubbing apparatus 51 is, for example, a storage tank containing a caustic liquid. After the waste gas passes through the alkali scrubbing apparatus 51, an acidic gas in the waste gas can be neutralized. During the pyrolysis of the PVC, mainly generated acidic gases are hydrogen chloride (HCl) and the like.

Under certain temperature and pressure conditions, some gases cannot be condensed and liquefied in the condensing device 42, and uncondensed gases pass through the alkali scrubbing apparatus 51, to remove acidic gases in the uncondensed gases, and the remaining uncondensed gases may be used as a supplementary fuel in the pyrolysis rotary kiln 2 for heating, thereby reducing energy consumption. Common non-condensable gases mainly include inert gases, methane, carbon monoxide, hydrogen, and other alkanes.

The demisting apparatus 52 includes, for example, plates, a support apparatus, and the like. During a process of spraying adsorption, the demisting apparatus 52 traps fog particles and slurry droplets carried in the waste gas, to purify the gas.

The adsorption unit 53 is, for example, activated carbon, to adsorb carbon monoxide, carbon dioxide, and the like, and filter out fine particles in the gas, thereby implementing purification of the gas.

When being connected to the smoldering system 3, the waste gas processing system 5 also needs to perform alkali scrubbing on the waste gas, to remove acidic gases from the waste gas, and process the waste gas sing the demisting apparatus 52 and the adsorption unit 53, so that the processed gas meets emission standards.

It needs to be noted that the apparatus for processing waste wind turbine blades in this application is controlled based on a control system. The control system may be a pre-stored program. One control system may be disposed in each system or unit separately, and then control is performed based on a general control end, or one control system is shared to control the apparatus for processing waste wind turbine blades, and details are subject to actual situations.

In related technologies, a waste wind turbine blade is decomposed through calcination, and is microscopically represented and observed through an SU3500 Tungsten Filament Scanning Electron Microscope (SEM). In this decomposition manner, it may be observed that during thermal decomposition of the material, molten spheres or some polymer linked to fiber may appear, exhibiting distinct molten smooth surfaces. A higher temperature indicates a more degraded performance of the glass fiber, making it impossible to achieve high-value utilization of the glass fiber. The pyrolyzed material has a particular temperature, and has a large quantity of adhered pyrolytic carbon. This causes a waste of energy. Moreover, the characteristic of glass fiber of the pyrolyzed material is not utilized, and resources are not fully utilized.

The apparatus for processing waste wind turbine blades in this application may implement resource recycling of waste wind turbine blades. The apparatus for processing waste wind turbine blades is a complete set of equipment, and has a high organic handling rate, a clean product, and a safe and efficient process.

Waste wind turbine blades are decomposed into small-molecule organic compounds after pyrolysis. A process of the pyrolysis is simple and efficient, and fast processing of the waste wind turbine blades is implemented without the help of a high-pressure environment or addition of a particular medium. The pyrolysis can resolve a problem that a bond between a fiber/resin interface is strong and separation is difficult, and convert waste wind turbine blades into small gaseous particles.

In a processing process of the apparatus for processing waste wind turbine blades, a high-temperature-resistant component such as glass fiber is extracted mainly based on phase separation of a composite system, so that a problem in waste wind turbine blades that fiber and resin in a fiber-reinforced composite material have a strong interface bond and are difficult to separate is effectively resolved, thereby implementing massive and continuous handling, and improving processing efficiency.

The vehicle-mounted mobile automatic wind turbine blade cutting device is used, and a water jet cutting speed and a cutting position are adjusted based on program control for portions of different thicknesses of the waste wind turbine blade, thereby reducing the cutting time and improving the processing efficiency of the device.

The smoldering system is used, self-maintained burning in an oxidant environment is implemented using the temperature of the material and the porous medium property of glass fiber, to remove accumulated carbon on the surface of the glass fiber, and restore the natural color. In addition, the performance of the glass fiber is effectively kept from being greatly degraded, and self-sustained burning is used without an external heat source, thereby reducing energy consumption.

The waste gas processing system can emit generated waste gas that meets standards, thereby avoiding pollution to a natural environment. Under certain temperature and pressure conditions, some gases cannot be condensed and liquefied in the condensing device, and uncondensed gases pass through the alkali scrubbing apparatus, to remove acidic gases in the uncondensed gases, and the remaining uncondensed gases are used as a supplementary material in the pyrolysis rotary kiln for heating, thereby achieving resource recycling, reducing energy consumption, and implementing low-energy-consumption operation.

It should be understood that terms used herein are for the purpose of describing specific example implementation s only, and are not intended to be limiting. Unless the context clearly indicates otherwise, the singular forms "a" and "an" as used herein may also include plural forms. The terms "comprising", "including", "containing", and "having" are inclusive and, therefore, specify the presence of the stated features, steps, operations, elements, and/or components, but do not preclude the presence or addition of one or more other features, steps, operations, elements, components, and/or combinations thereof. Method steps, processes, and operations described herein are not to be construed as requiring them to be performed in a specific order described or indicated, unless the order of execution is explicitly specified. It is also to be understood that additional or alternative steps may be employed.

Although terms "first", "second", "third", and the like may be used herein to describe a plurality of elements, components, regions, layers, and/or sections, these elements, components, regions, and/or sections should not be limited by these terms. These terms may be used only to distinguish one element, component, region, layer, or section from another region, layer, or section. Unless the context explicitly indicates otherwise, the terms such as "first" and "second" and other numerical terms do not imply an order or a sequence when used herein. Therefore, a first element, component, region, layer, or section discussed below may be referred to as a second element, component, region, layer, or section without departing from the teachings of example implementations. The above embodiments of this application focus on the differences between the various embodiments. As long as different optimization features of the various embodiments do not contradict, the various embodiments can be combined to form better embodiments, which will not be repeated herein for brevity of text.

The embodiments of this application have been described above with reference to the accompanying drawings. This application is not limited to the specific implementations described above, and the specific implementations described above are merely examples and not limitative. Those of ordinary skill in the art may make many forms under the teaching of this application without departing from the spirit of this application and the scope of protection of the claims, and these forms shall all fall within the protection of this application.

## Claims

1. A blade cutting device, comprising a device frame (100), a conveying apparatus (200), and a cutting apparatus (300), wherein
the device frame (100) comprises a first frame body (110) and a second frame body (120), the first frame body (110) and the second frame body (120) are movably connected to enable the device frame (100) to switch between an expanded state and a collapsed state, the conveying apparatus (200) is disposed on the first frame body (110), and the cutting apparatus (300) is disposed on the second frame body (120);
when the device frame (100) is in the expanded state, the conveying apparatus (200) and the cutting apparatus (300) are spaced apart in an expansion plane of the device frame (100), the conveying apparatus (200) is configured to convey a blade (A) to be cut, and the cutting apparatus (300) is configured to cut the blade (A) to be cut; and
when the device frame (100) is in the collapsed state, the conveying apparatus (200) moves with the first frame body (110) to a position above the second frame body (120).

2. The blade cutting device according to claim 1, wherein the blade cutting device further comprises a frame drive mechanism (400), and the frame drive mechanism (400) is connected between the first frame body (110) and the second frame body (120) and configured to drive the first frame body (110) to move relative to the second frame body (120) to enable the device frame (100) to switch between the expanded state and the collapsed state.

3. The blade cutting device according to claim 2, wherein the frame drive mechanism (400) is a fluid drive mechanism.

4. The blade cutting device according to claim 1, wherein the device frame (100) further comprises a locking mechanism (150), and the locking mechanism (150) is disposed on the second frame body (120); and the locking mechanism (150) is configured to lock the first frame body (110) to the second frame body (120) when the device frame (100) is in the collapsed state.

5. The blade cutting device according to claim 1, wherein the blade cutting device further comprises a housing (600) and a column (140), the housing (600) comprises a top plate (610) and two oppositely disposed side plates (620), the top plate (610) is disposed above the second frame body (120) via the column (140), and the two side plates (620) are respectively rotatably connected to two opposite end portions of the top plate (610);
when the device frame (100) is in the expanded state, the two side plates (620) are rotated relative to the top plate (610) to a position in a same plane as the top plate (610), and one of the two side plates (620) is opposite to the first frame body (110); and
when the device frame (100) is in the collapsed state, the two side plates (620), the top plate (610), and the second frame body (120) define an accommodating space, to enable the first frame body (110), the conveying apparatus (200), and the cutting apparatus (300) to be located in the accommodating space.

6. The blade cutting device according to claim 5, wherein the column (140) is a telescopic column, the blade cutting device further comprises a lifting drive member (700), and the lifting drive member (700) is disposed on the second frame body (120) and connected to the top plate (610);
when the device frame (100) is in the expanded state, the lifting drive member (700) drives the column (140) to extend to a first length via the top plate (610); and
when the device frame (100) is in the collapsed state, the lifting drive member (700) drives the column (140) to extend to a second length via the top plate (610), wherein the first length is greater than the second length.

7. The blade cutting device according to claim 1, wherein the conveying apparatus (200) comprises a first drive mechanism (210), a second drive mechanism (220), and at least two rotating assemblies (230), each of the rotating assemblies (230) comprises a mounting bracket (231) and a rotating body (232), the mounting bracket (231) is disposed on the first frame body (110), the rotating body (232) is rotatably disposed on the mounting bracket (231), and a conveying space is formed between the rotating bodies (232) of the two rotating assemblies (230); and
the first drive mechanism (210) is connected to the mounting bracket (231) and configured to drive the mounting bracket (231) to move along the device frame (100), to drive the rotating bodies (232) of the two rotating assemblies (230) to clamp the blade (A) to be cut; and the second drive mechanism (220) is connected to the rotating bodies (232) and configured to drive the rotating bodies (232) to rotate, to drive the blade (A) to be cut to extend by a preset length along the conveying space, and the cutting apparatus (300) is configured to cut a portion of the blade (A) to be cut that extends out of the conveying space.

8. The blade cutting device according to claim 1, wherein the cutting apparatus (300) comprises an omnidirectional mobile robotic arm (310), a lifting mechanism (320), and a cutting body (330), the lifting mechanism (320) is disposed on the second frame body (120), connected to the omnidirectional mobile robotic arm (310), and configured to drive the omnidirectional mobile robotic arm (310) to lift, and the omnidirectional mobile robotic arm (310) is connected to the cutting body (330).

9. The blade cutting device according to claim 7, wherein the first drive mechanism (210) is a constant-pressure drive mechanism, and in a process in which the blade (A) extends by the preset length along the conveying space, a force exerted to clamp the blade (A) by the rotating bodies (232) driven by the first drive mechanism (210) via the mounting brackets (231) remains at a preset pressure.

10. The blade cutting device according to claim 9, wherein the device frame (100) is provided with a guide rail (160), an extension direction of the guide rail (160) is perpendicular to a conveying direction of the blade (A) in the conveying space, the mounting bracket (231) is provided with a guide rail engaging portion (231a), the guide rail engaging portion (231a) is disposed on the guide rail (160), and the mounting bracket (231) moves along the device frame (100) through guiding engagement between the guide rail engaging portion (231a) and the guide rail (160), to drive the rotating bodies (232) to clamp the blade (A);
and/or
the blade cutting device further comprises a detection apparatus and a first control apparatus, the detection apparatus is disposed on the device frame (100), the detection apparatus is configured to detect whether the blade (A) extends by the preset length along the conveying space, and the detection apparatus and the second drive mechanism (220) are both connected to the first control apparatus; and when the detection apparatus detects that the blade (A) extends by the preset length along the conveying space, the first control apparatus controls the second drive mechanism (220) to stop driving the rotating bodies (232);
and/or
the blade cutting device further comprises the first control apparatus, the first drive mechanism (210), the second drive mechanism (220), and the cutting apparatus (300) are all connected to the first control apparatus, the first control apparatus is configured to control the first drive mechanism (210) to drive the mounting brackets (231) to move along the device frame (100), to drive the rotating bodies (232) of the at least two rotating assemblies (230) to clamp the blade (A); when the rotating bodies (232) of the at least two rotating assemblies (230) clamp the blade (A), the first control apparatus is configured to control the second drive mechanism (220) to drive the rotating bodies (232) to rotate, to drive the blade (A) to extend by the preset length along the conveying space; and when the blade (A) extends out of the conveying space by the preset length, the first control apparatus is configured to control the cutting apparatus (300) to cut the portion of the blade (A) that extends out of the conveying space.

11. The blade cutting device according to claim 9, wherein the conveying apparatus (200) further comprises an auxiliary conveying assembly (240), the auxiliary conveying assembly (240) comprises an auxiliary base (241) and an auxiliary roller (242), the auxiliary base (241) is disposed on the device frame (100), the auxiliary roller (242) is rotatably disposed on the auxiliary base (241) about a first axis, an extension direction of the first axis is perpendicular to a conveying direction of the blade (A) in the conveying space, and the auxiliary roller (242) is configured to be in rolling engagement with the blade (A) in the conveying direction.

12. The blade cutting device according to claim 11, wherein the conveying apparatus (200) comprises a first auxiliary conveying assembly (240a) and a second auxiliary conveying assembly (240b), and the first auxiliary conveying assembly (240a) and the second auxiliary conveying assembly (240b) are respectively disposed on two sides of the conveying space in the conveying direction.

13. The blade cutting device according to claim 8, wherein the cutting apparatus (300) is a waterjet cutting apparatus, and the cutting body (330) is a waterjet cutting head.

14. The blade cutting device according to claim 13, wherein the cutting apparatus (300) further comprises a scanning apparatus (340) and a second control apparatus, the omnidirectional mobile robotic arm (310), the lifting mechanism (320), the cutting body (330), and the scanning apparatus (340) are all connected to the second control apparatus, the scanning apparatus (340) is configured to scan a portion of the blade (A) that extends out of a conveying space, and the second control apparatus determines a cutting path based on scanning information of the scanning apparatus (340), and controls the lifting mechanism (320) and the omnidirectional mobile robotic arm (310) to drive the cutting body (330) to cut the blade (A) along the cutting path.

15. The blade cutting device according to claim 13, wherein the blade cutting device further comprises the device frame (100) and a wastewater collection module (900), wherein
the wastewater collection module (900) comprises a water receiving tray (910) and a wastewater tank (920), the water receiving tray (910) is disposed on the device frame (100) and located below the waterjet cutting head, and the wastewater tank (920) is disposed on the device frame (100) and connected to the water receiving tray (910).

16. The blade cutting device according to claim 15, wherein the wastewater collection module (900) further comprises a settling tank (930) and a water pump (940), the settling tank (930) is disposed on the device frame (100), and the water receiving tray (910), the settling tank (930), the water pump (940), and the wastewater tank (920) are sequentially connected.

17. A blade cutting method, performed based on a blade cutting device provided with a conveying space, and the method comprising:
conveying a blade (A), to enable the blade (A) to extend out of the conveying space by a preset length; and
scanning an output portion of the blade (A) that extends out of the conveying space, and obtaining scanning information;
determining a cutting path for the output portion based on the scanning information; and
cutting the output portion along the cutting path.

18. The method according to claim 17, wherein the blade cutting device comprises a device frame (100), a conveying apparatus (200), and a cutting apparatus (300), the conveying apparatus (200) is disposed on the device frame (100), the conveying apparatus (200) is provided with the conveying space, the cutting apparatus (300) comprises a drive module (311), a cutting body (330), and a scanning apparatus (340), the drive module (311) is disposed on the device frame (100), and the cutting body (330) is connected to the drive module (311); and
the method comprises:
controlling the conveying apparatus (200) to convey the blade (A), to enable the blade (A) to extend out of the conveying space by the preset length;
controlling the scanning apparatus (340) to scan the output portion of the blade (A) that extends out of the conveying space and obtain the scanning information;
determining the cutting path for the output portion based on the scanning information; and
controlling the drive module (311) to drive the cutting body (330) to cut the output portion along the cutting path.

19. The method according to claim 17, wherein the blade (A) comprises two arc-shaped side plates (A1), a first inner plate (A2), and a second inner plate (A3), the two arc-shaped side plates (A1) define an inner cavity, the first inner plate (A2) and the second inner plate (A3) are disposed in the inner cavity, the first inner plate (A2) and the second inner plate (A3) are both connected between the two arc-shaped side plates (A1) and spaced apart, the cutting of the blade (A) is implemented based on the cutting apparatus (300), a number of cutting apparatuses (300) is two, and the two cutting apparatuses (300) are respectively located on two sides of the two arc-shaped side plates (A1);
the determining the cutting path for the output portion based on the scanning information comprises:
determining a first cutting route, a second cutting route, a third cutting route, a fourth cutting route, and a fifth cutting route based on the scanning information, wherein the cutting path comprises the first cutting route, the second cutting route, the third cutting route, the fourth cutting route, and the fifth cutting route; and
the cutting the output portion along the cutting path comprises:
cutting the blade (A) for portions on a corresponding side of the blade (A) sequentially along the first cutting route, the second cutting route, the third cutting route, the fourth cutting route, and the fifth cutting route, wherein the first cutting route is a route that extends along the arc-shaped side plates (A1) in a first direction and that is located on a side of the first inner plate (A2) facing away from the second inner plate (A3); the second cutting route is a route that extends along the arc-shaped side plates (A1) in the first direction and that is located on a side of the second inner plate (A3) facing away from the first inner plate (A2); the third cutting route is a route that extends along the first inner plate (A2) in the first direction and that is located at an end portion of the first inner plate (A2); the fourth cutting route is a route that extends along the second inner plate (A3) in the first direction and that is located at an end portion of the second inner plate (A3); and the fifth cutting route is a route that extends along a second direction and that connects a tail of the first cutting route, a tail of the second cutting route, a tail of the third cutting route, and a tail of the fourth cutting route.

20. An apparatus for processing a waste wind turbine blade, comprising:
the blade cutting device according to any one of claims 1 to 16;
a crushing mechanism, configured to crush the waste wind turbine blade;
a pyrolysis rotary kiln, connected to the crushing mechanism, and performing pyrolysis on the crushed waste wind turbine blade;
a smoldering system and an oil recovery system, respectively connected to the pyrolysis rotary kiln; and
a waste gas processing system, connected to any one of the smoldering system, the oil recovery system, and the pyrolysis rotary kiln.
